# EUROPEAN PATENT APPLICATION

(11) **EP 4 656 448 A1**
(43) Date of publication of application: **03.12.2025**
(21) Application number: 25168867.7
(22) Date of filing: 07.04.2025
(51) Int. Cl.: B60L 53/62, B60L 53/66, B60L 53/68, B60L 58/13, H02J 7/00, B60L 1/02, B60L 8/00

(54) **MANAGEMENT SYSTEM, VEHICLE, AND METHOD OF MANAGING POWER STORAGE DEVICE**

(30) Priority: 26.04.2024 JP 2024072011
(71) Applicant: TOYOTA JIDOSHA KABUSHIKI KAISHA, Toyota-shi, Aichi-ken, 471-8571 (JP)
(72) Inventor: YAMAUCHI, Yuya, Aichi-ken, 471-8571 (JP)
(74) Representative: D Young & Co LLP

(57) **Abstract**

A management system includes a management apparatus (20) that manages a power storage device (100) mounted on a vehicle (10). The management apparatus (20) is configured to instruct the vehicle (10) to charge the power storage device (100) in accordance with a charging plan that indicates a charging schedule in a plan period. The management apparatus (20) is configured to obtain a power storage plan for the power storage device (100) with respect to the plan period. The power storage plan includes at least one piece of plan data that indicates combination of time within the plan period and a planned value of an amount of power storage in the power storage device (100) at that time. The management apparatus (20) is configured to modify the charging plan in response to determination that the amount of power storage in the power storage device (100) deviates from the power storage plan beyond an allowable range.

## Description

### CROSS REFERENCE TO RELATED APPLICATIONS

This nonprovisional application is based on Japanese Patent Application No. 2024-072011 filed with the Japan Patent Office on April 26, 2024, the entire contents of which are hereby incorporated by reference.

### BACKGROUND

### Field

The present disclosure relates to a management system, a vehicle, and a method of managing a power storage device.

### Description of the Background Art

Japanese Patent Laying-Open No. 2023-102198 discloses a server apparatus that creates a charging/discharging plan for a power storage device (battery) mounted on a vehicle and causes the vehicle to carry out the created charging/discharging plan. The server apparatus creates the charging/discharging plan, with power demand (an amount of consumption of prescribed electric power by an electric load) within a community being incorporated.

### SUMMARY

Charging or discharging not scheduled in a charging/discharging plan may be performed onto a power storage device mounted on a vehicle. For example, in the vehicle, electric power in the power storage device may be used in response to a discharging request (for example, a request for activation of an air-conditioner) from a user or a discharging request under predetermined vehicle control (for example, control for adjustment of a temperature of the power storage device). The user may schedule use of electric power in the power storage device, for example, for travel of the vehicle or air-conditioning in the vehicle after end of a charging plan.

A technique described in Japanese Patent Laying-Open No. 2023-102198 is on the premise that a vehicle performs charging/discharging of a power storage device (battery) as indicated in a charging/discharging plan. Therefore, when charging and/or discharging not scheduled in the charging/discharging plan is/are performed, it becomes difficult to carry out the charging/discharging plan, or excess or shortage of an amount of power storage in the power storage device may be likely. Charging and discharging not scheduled in the charging/discharging plan may then be prohibited. Such a configuration, however, may give rise to a problem of compromised convenience of a user.

The present disclosure was made to solve the problem above, and an object thereof is to provide a management system, a vehicle, and a method of managing a power storage device that allow suppression of great deviation from a plan, of an amount of power storage in a power storage device mounted on a vehicle while charging and/or discharging of the power storage device not scheduled in the plan is/are allowed.

According to a first point of view of the present disclosure, a management system shown below is provided.

(Clause 1) The management system includes a management apparatus that manages a power storage device mounted on a vehicle. The management apparatus is configured to instruct the vehicle to charge the power storage device in accordance with a charging plan that indicates a charging schedule in a plan period. The management apparatus is configured to obtain a power storage plan for the power storage device with respect to the plan period. The power storage plan includes at least one piece of plan data that indicates combination of time within the plan period and a planned value of an amount of power storage in the power storage device at that time. The management apparatus is configured to modify the charging plan in response to determination that the amount of power storage in the power storage device deviates from the power storage plan beyond an allowable range.

In the management system, when the amount of power storage in the power storage device deviates from the power storage plan beyond the allowable range, for example, as a result of charging and/or discharging of the power storage device not scheduled in the plan in the vehicle, the charging plan is modified. Great deviation of the amount of power storage in the power storage device from the plan is thus suppressed.

The charging schedule may be information that indicates transition of charging power or information that indicates timing of on (start)/off (stop) of charging. The amount of power storage may be expressed by a state of charge (SOC), an amount of electric power (kWh), or another parameter such as a distance to empty of the vehicle.

(Clause 2) In the management system described in Clause 1, the at least one piece of plan data included in the power storage plan includes first plan data that indicates combination of start time of the plan period and the planned value of the amount of power storage in the power storage device at that start time and second plan data that indicates combination of end time of the plan period and the planned value of the amount of power storage in the power storage device at that end time.

According to the power storage plan including the first plan data and the second plan data, the amount of power storage in the plan period is more readily managed. The management apparatus may determine the amount of power storage in the first plan data based on a measurement value of the amount of power storage in the power storage device at the time when the vehicle is connected to an external power feed facility. The management apparatus may determine the amount of power storage in the second plan data based on input from a user of the vehicle.

(Clause 3) In the management system described in Clause 2, the at least one piece of plan data included in the power storage plan further includes third plan data at time after the start time of the plan period and before the end time of the plan period, and the management apparatus is configured to obtain the third plan data based on at least one of the first plan data and the second plan data.

According to the configuration, the management apparatus more readily efficiently creates the power storage plan.

(Clause 4) In the management system described in any one of Clauses 1 to 3, the vehicle is configured to perform, in response to the vehicle receiving a discharging request directed to the power storage device within the plan period, discharging of the power storage device in accordance with the discharging request while the vehicle performs charging of the power storage device in accordance with the charging plan. The discharging request includes at least one of a discharging request from a user and a discharging request under predetermined vehicle control.

The vehicle accepts the discharging request during charging in accordance with the charging plan. Convenience of the user of the vehicle can thus be enhanced or an unfavorable condition of the vehicle (for example, shorter lifetime of the power storage device) can be suppressed.

(Clause 5) In the management system described in any one of Clauses 1 to 4, the management apparatus is configured to determine the allowable range based on a maximum amount of electric power chargeable to the power storage device by the vehicle per unit period and a maximum amount of electric power dischargeable from the power storage device by the vehicle per unit period.

According to the configuration, deviation of the amount of power storage in the power storage device from the plan to a large extent (to such an extent as being unrecoverable) is suppressed. As the management apparatus uses the allowable range determined as above to manage a degree of deviation of the measurement value and the planned value of the amount of power storage, great deviation of charging power for the power storage device and the amount of power storage in the power storage device from the charging plan and the power storage plan is suppressed.

(Clause 6) In the management system described in any one of Clauses 1 to 5, the management apparatus is configured to obtain a measurement value of the amount of power storage in the power storage device in response to the vehicle being connected to an external power feed facility and to obtain the charging plan and the power storage plan for the power storage device by using the obtained measurement value of the amount of power storage.

Completion of preparation for charging of the power storage device in the vehicle is highly likely at the time of connection of the vehicle to the external power feed facility. As preparation for charging is completed, possibility of use of electric power in the power storage device in the vehicle becomes lower than before completion of preparation for charging. Therefore, according to the configuration, an appropriate charging plan and an appropriate power storage plan are more readily obtained.

(Clause 7) In the management system described in any one of Clauses 1 to 6, the vehicle further includes a controller. The vehicle is configured to set in the controller, the charging schedule indicated in the charging plan in response to the vehicle being instructed by the management apparatus to charge the power storage device in accordance with the charging plan. The controller is configured to carry out charging control for the power storage device in accordance with the set charging schedule.

The vehicle can charge the power storage device in accordance with the charging plan based on the set charging schedule, without an instruction from the management apparatus within the plan period. According to the configuration, the power storage device can be charged in accordance with the charging plan while a frequency of communication between the vehicle and the management apparatus is suppressed.

(Clause 8) In the management system described in any one of Clauses 1 to 7, the vehicle is configured to transmit to the management apparatus, power storage information that indicates a measurement value of the amount of power storage in the power storage device in response to a prescribed condition being satisfied. The management apparatus is configured to determine whether the amount of power storage in the power storage device deviates from the power storage plan beyond the allowable range in response to the management apparatus receiving the power storage information from the vehicle and to modify the charging plan based on the power storage information and the power storage plan in response to determination that the amount of power storage in the power storage device deviates from the power storage plan beyond the allowable range.

By setting reception by the management apparatus, of the power storage information from the vehicle as a trigger for determination as to the amount of power storage (determination as to whether or not the degree of deviation between the measurement value and the planned value of the amount of power storage is large) as above, time and efforts for monitoring of a state of the vehicle by the management apparatus can be saved. As the management apparatus modifies the charging plan based on the measurement value of the amount of power storage and the power storage plan, the management apparatus more readily creates a future charging plan so as to reduce the degree of deviation between the measurement value and the planned value of the amount of power storage.

(Clause 9) In the management system described in Clause 8, when the vehicle performs charging of the power storage device before the plan period, the prescribed condition is satisfied at the time of end of charging of the power storage device. The management apparatus is configured to determine whether a degree of deviation between the measurement value of the amount of power storage at the time of end of charging of the power storage device and the planned value of the amount of power storage at the start time of the plan period based on the power storage information and the power storage plan in response to the management apparatus receiving the power storage information from the vehicle, and to modify the charging plan based on the power storage information and the power storage plan in response to determination that the degree of deviation exceeds the allowable range.

According to the configuration, when the amount of power storage in the power storage device deviates from the power storage plan beyond the allowable range due to charging before the plan period, the charging plan can be modified.

(Clause 10) In the management system described in Clause 8 or 9, the prescribed condition is satisfied when charging of the power storage device stops within the plan period. The management apparatus is configured to determine whether a degree of deviation between the measurement value of the amount of power storage at current time and the planned value of the amount of power storage exceeds the allowable range based on the power storage information and the power storage plan in response to the management apparatus receiving the power storage information from the vehicle, and to modify the charging plan based on the power storage information and the power storage plan in response to determination that the degree of deviation exceeds the allowable range.

According to the configuration, when the amount of power storage in the power storage device deviates from the power storage plan beyond the allowable range due to charging within the plan period, the charging plan can be modified.

(Clause 11) In the management system described in any one of Clauses 1 to 10, the management apparatus is configured to obtain a measurement value of the amount of power storage in the power storage device at timing a prescribed time period before the end time of the charging plan and to extend the plan period of the charging plan in response to determination that the obtained measurement value deviates from the power storage plan beyond the allowable range.

As the management apparatus extends the plan period as above when the amount of power storage in the power storage device deviates from the power storage plan beyond the allowable range at the timing a prescribed time period before the end time of the charging plan, the amount of power storage in the power storage device can more readily be brought closer to the planned value.

(Clause 12) In the management system described in any one of Clauses 1 to 11, the management apparatus is configured to instruct the vehicle to discharge the power storage device in accordance with a discharging plan that indicates a discharging schedule in the plan period. The management apparatus is configured to obtain the power storage plan for the power storage device with respect to the plan period of the discharging plan and to modify the discharging plan in response to determination that the amount of power storage in the power storage device deviates from the obtained power storage plan beyond an allowable range.

According to the configuration, great deviation of the amount of power storage in the power storage device from the plan can be suppressed also in discharging of the power storage device in the vehicle in accordance with the discharging plan, as in charging of the power storage device in the vehicle in accordance with the charging plan. Therefore, while charging and/or discharging not scheduled in the plan is/are allowed for the power storage device mounted on the vehicle, great deviation of the amount of power storage in the power storage device from the plan can be suppressed.

(Clause 13) In the management system described in any one of Clauses 1 to 12, the management apparatus is at least one computer on a cloud.

According to the configuration, the management apparatus is implemented on the cloud. Therefore, the vehicle and the user more readily access the management apparatus.

According to a second point of view of the present disclosure, a vehicle shown below is provided.

(Clause 14) The vehicle includes a power storage device and a management apparatus that manages the power storage device. The management apparatus is configured to perform charging of the power storage device in accordance with a charging plan that indicates a charging schedule in a plan period. The management apparatus is configured to obtain a power storage plan for the power storage device with respect to the plan period. The power storage plan includes at least one piece of plan data that indicates combination of time within the plan period and a planned value of an amount of power storage in the power storage device at that time. The management apparatus is configured to modify the charging plan in response to determination that the amount of power storage in the power storage device deviates from the power storage plan beyond an allowable range.

According to the configuration, the management apparatus is implemented in the vehicle. Therefore, the vehicle can manage the amount of power storage described previously on a stand-alone basis.

According to a third point of view of the present disclosure, a method of managing a power storage device shown below is provided.

(Clause 15) The method of managing a power storage device is a method of managing a power storage device mounted on a vehicle, and includes instructing the vehicle to charge the power storage device in accordance with a charging plan that indicates a charging schedule in a plan period and obtaining a power storage plan for the power storage device with respect to the plan period. The power storage plan includes at least one piece of plan data that indicates combination of time within the plan period and a planned value of an amount of power storage in the power storage device at that time. The method further includes modifying the charging plan in response to determination that a measurement value of the amount of power storage in the power storage device deviates from the power storage plan beyond an allowable range and instructing the vehicle to charge the power storage device in accordance with the modified charging plan.

According to the method as well, similarly to the management system described previously, while charging and/or discharging not scheduled in the plan is/are allowed for the power storage device mounted on the vehicle, great deviation of the amount of power storage in the power storage device from the plan can be suppressed.

The foregoing and other objects, features, aspects, and advantages of this disclosure will become more apparent from the following detailed description of this disclosure when taken in conjunction with the accompanying drawings.

### BRIEF DESCRIPTION OF THE DRAWINGS

Fig. 1 is a diagram for illustrating overview of a management system according to an embodiment of the present disclosure.
Fig. 2 is a diagram showing an exemplary configuration of a vehicle according to the present embodiment.
Fig. 3 is a flowchart showing processing performed when the vehicle is connected to an external power feed facility in a method of managing a power storage device according to the present embodiment.
Fig. 4 is a flowchart showing charging/discharging control of the power storage device according to the present embodiment.
Fig. 5 is a flowchart showing processing involved with management of the power storage device according to the present embodiment.
Fig. 6 is a diagram for illustrating an exemplary power storage plan and an exemplary allowable range.
Fig. 7 is a diagram showing a first example and a second example of modification of a charging plan.
Fig. 8 is a diagram showing a third example of modification of the charging plan.
Fig. 9 is a diagram showing a first example and a second example of modification of a discharging plan.
Fig. 10 is a diagram showing a process flow according to a first modification.
Fig. 11 is a diagram showing a process flow according to a second modification.
Fig. 12 is a diagram showing a process flow according to a third modification.
Fig. 13 is a diagram showing a process flow according to a fourth modification.
Fig. 14 is a diagram showing a process flow according to a fifth modification.
Fig. 15 is a diagram showing a process flow according to a sixth modification.
Fig. 16 is a diagram showing a configuration of a management apparatus according to a seventh modification.
Fig. 17 is a diagram showing a configuration of a management apparatus according to an eighth modification.

### DESCRIPTION OF THE PREFERRED EMBODIMENTS

An embodiment of the present disclosure will be described in detail with reference to the drawings. The same or corresponding elements in the drawings have the same reference characters allotted and description thereof will not be repeated.

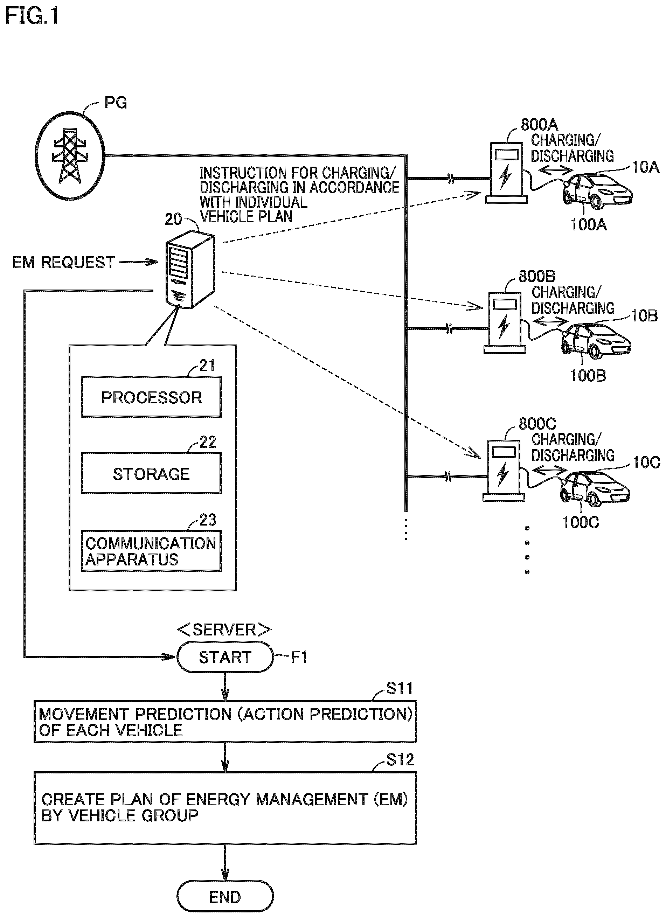

Fig. 1 is a diagram for illustrating overview of a power system and a management system according to this embodiment. Referring to Fig. 1, the power system includes a power grid PG and a plurality of pieces of EVSE (for example, EVSE 800A, EVSE 800B, EVSE 800C, ...). EVSE stands for electric vehicle supply equipment. In the example shown in Fig. 1, vehicles 10A, 10B, and 10C are connected to EVSE 800A, EVSE 800B, and EVSE 800C, respectively. Vehicles 10A, 10B, and 10C include batteries 100A, 100B, and 100C, respectively. Each piece of EVSE is electrically connected to power grid PG. Power grid PG is a power network constructed by power transmission and distribution facilities. Power grid PG may include a substation facility. Power grid PG may be connected to a not-shown power generation facility. In this embodiment, each piece of EVSE is an alternating-current (AC) power feed facility that outputs AC power. Without being limited as such, each piece of EVSE may be a direct-current (DC) power feed facility that outputs DC power. Each piece of EVSE may be a charger provided (fixed) in a house or may be a public charging stand.

The management system includes a server 20. Server 20 includes a processor 21, a storage 22, and a communication apparatus 23. Server 20 is configured to manage a vehicle group including a plurality of vehicles (for example, vehicles 10A, 10B, 10C ...). More specifically, server 20 manages a power storage device mounted on each vehicle. Server 20 communicates with each vehicle through communication apparatus 23. Server 20 and each vehicle may communicate with each other through wired or wireless communication. Server 20 may communicate with the vehicle through the EVSE. Server 20 transmits an instruction for charging and discharging of the battery to each vehicle. Charging and discharging will also comprehensively and collectively be referred to as "charging/discharging" below. Charging/discharging of the power storage device means transfer of electricity to and from the power storage device. Control of at least one of charging and discharging of the power storage device will also be referred to as "charging/discharging control." Charging and discharging may be distinguished from each other by change of a sign depending on an orientation of a current. For example, charging power may be expressed with a positive value and discharging power may be expressed with a negative value. Charging power and discharging power can thus be expressed with a common parameter. Charging control and discharging control are more readily carried out with a common algorithm by using such a parameter.

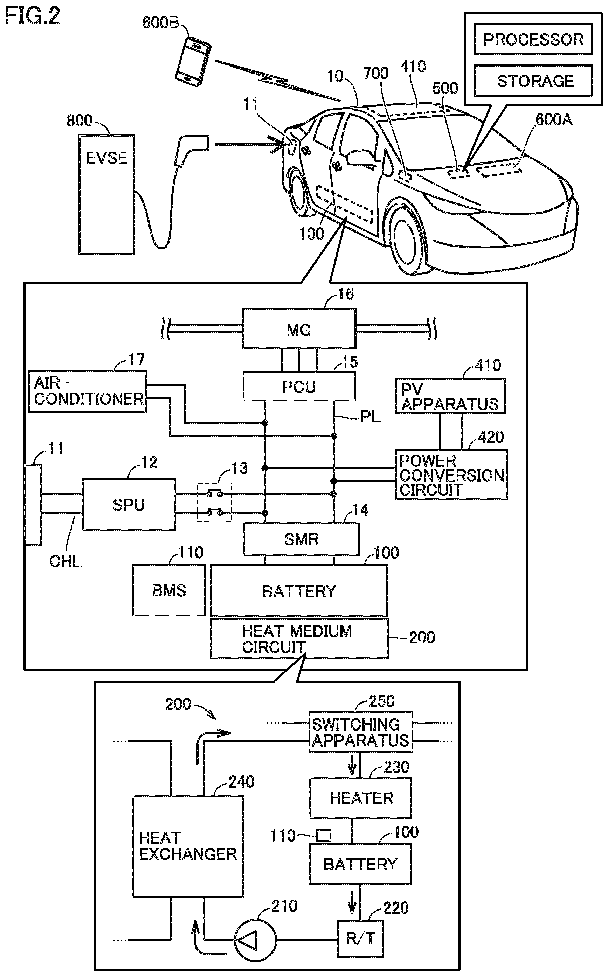

When the plurality of vehicles and the plurality of batteries managed by server 20 are not distinguished, each vehicle will be referred to as a "vehicle 10" below and each battery will be referred to as a "battery 100" below. When a plurality of pieces of EVSE connected to power grid PG are not distinguished, each piece of EVSE will be referred to as "EVSE 800". Vehicle 10, battery 100, and EVSE 800 are configured, for example, as shown in Fig. 2 which will be described below. In this embodiment, server 20, vehicle 10, battery 100, and EVSE 800 correspond to an exemplary "management apparatus," an exemplary "vehicle", an exemplary "power storage device," and an exemplary "power feed facility" according to the present disclosure, respectively.

Fig. 2 is a diagram showing an exemplary configuration of vehicle 10. Referring to Fig. 2, vehicle 10 includes an inlet 11, a smart power unit (SPU) 12, a charging/discharging relay 13, a system main relay (SMR) 14, a power control unit (PCU) 15, a motor generator (MG) 16, an air-conditioner 17, battery 100, a heat medium circuit 200, a photovoltaic (PV) apparatus 410, a power conversion circuit 420, an electronic control unit (ECU) 500, a human machine interface (HMI) 600A, and a communication apparatus 700. ECU 500 corresponds to an exemplary "controller" according to the present disclosure.

Vehicle 10 is configured to travel with electric power outputted from battery 100. Battery 100 may include a secondary battery such as a lithium ion battery, a nickel metal hydride battery, or a sodium ion battery. A type of the secondary battery may be a liquid secondary battery or an all-solid secondary battery. A plurality of secondary batteries may form a battery assembly. Another power storage device (for example, an electric double layer capacitor) instead of the secondary battery may be adopted. Vehicle 10 is, for example, a battery electric vehicle (BEV) without an internal combustion engine. Without being limited as such, vehicle 10 may be a plug-in hybrid electric vehicle including an internal combustion engine or another electrically powered vehicle (xEV).

SMR 14 is a relay located between battery 100 and PCU 15 in a high-voltage power supply line PL. SMR 14 switches between connection and disconnection of high-voltage power supply line PL. MG 16 functions as a drive motor and rotates a drive wheel of vehicle 10. PCU 15 functions as a drive circuit that drives MG 16, and drives MG 16 with electric power supplied from battery 100. MG 16 converts electric power into torque. Torque is transmitted to the drive wheel. MG 16 regenerates electric power, for example, in deceleration of vehicle 10 to charge battery 100.

Battery 100 is provided with a battery management system (BMS) 110 that monitors a state of battery 100. BMS 110 includes various sensors that detect the state (for example, a voltage, a current, and a temperature) of battery 100 and outputs a result of detection to ECU 500. BMS 110 performs a state-of-charge (SOC) measurement function and outputs a measurement value of the SOC of battery 100 to ECU 500. The SOC represents a ratio of a current amount of power storage to an amount of power storage in a fully charged state. A known technique such as a current integration method or an open circuit voltage (OCV) estimation method can be adopted as a method of measuring the SOC.

ECU 500 obtains detection values from various sensors (BMS 110 and a position sensor, a vehicle speed sensor, an outside air temperature sensor, and the like that are not shown) mounted on vehicle 10 and controls various devices mounted on vehicle 10. The various devices mounted on vehicle 10 are directly or indirectly supplied with electric power from battery 100. For example, each device (for example, PCU 15 and air-conditioner 17) connected to high-voltage power supply line PL is directly supplied with electric power from battery 100. A low-voltage type vehicle-mounted device (for example, auxiliary machinery) is supplied with electric power from a low-voltage battery (for example, an auxiliary battery) lower in voltage than battery 100. As the amount of power storage in the low-voltage battery decreases, electric power is supplied from battery 100 to the low-voltage battery.

Heat medium circuit 200 includes a flow path through which a heat medium flows. The flow path in heat medium circuit 200 is provided such that the heat medium that flows through the flow path exchanges heat with battery 100. Heat medium circuit 200 is configured to adjust the temperature of battery 100 with electric power outputted from battery 100. Specifically, heat medium circuit 200 further includes a pump 210, a reservoir tank (R/T) 220, a heater 230, a heat exchanger 240, and a switching apparatus 250. Pump 210 circulates the heat medium through the flow path in heat medium circuit 200. Heater 230 heats the heat medium that flows through the flow path in heat medium circuit 200. Heater 230 may be provided to directly heat battery 100.

The flow path in heat medium circuit 200 is connected to a flow path in another heat medium circuit (which will be referred to as a "first heat medium circuit" below) through heat exchanger 240. Heat exchanger 240 may be a chiller or a condenser. The first heat medium circuit includes, for example, a cooling circuit (refrigeration cycle circuit) of air-conditioner 17. Heat exchanger 240 causes heat exchange between the heat medium that flows through the flow path in heat medium circuit 200 and a heat medium that flows through the flow path in the first heat medium circuit. Furthermore, the flow path in heat medium circuit 200 is connected to a flow path in each of a plurality of heat medium circuits (which will be referred to as "second heat medium circuits" below) through switching apparatus 250. Switching apparatus 250 is implemented, for example, by a five-way valve. The plurality of second heat medium circuits may include at least one of a circuit through which the heat medium circulates to cool SPU 12, PCU 15, and MG 16 and a circuit through which the heat medium to be cooled by a radiator circulates. Switching apparatus 250 connects the flow path in heat medium circuit 200 to the flow path in any of the plurality of second heat medium circuits or disconnects the flow path in heat medium circuit 200 from the flow path in each of the plurality of second heat medium circuits, in accordance with an instruction from ECU500. ECU 500 can cause, for example, the flow path in heat medium circuit 200 to be connected to the flow path in the second heat medium circuit through which the heat medium at a low temperature flows, so as to lower the temperature of the heat medium that flows through the flow path in heat medium circuit 200 to cool battery 100.

A known heat medium can be adopted as the heat medium that flows through each heat medium circuit. For example, the heat medium that flows through the flow path in heat medium circuit 200 may be water, insulating oil, or long life coolant (LLC). Without being limited thereto, another heat medium (fluorine-based refrigerant, carbon dioxide, or the like) may be adopted. Another multi-port valve (an eight-way valve, a nine-way valve, a ten-way valve, or the like) may be adopted as switching apparatus 250 instead of the five-way valve.

Vehicle 10 is configured to be capable of external charging (charging of battery 100 with electric power from the outside of the vehicle) and external power feed (power feed to the outside of the vehicle with electric power in battery 100). SPU 12 may include an electric supply unit (ESU). SPU 12 is provided in a charging/discharging line CHL and functions as a vehicle-mounted charger-discharger (a charging circuit and a discharging circuit). Charging/discharging relay 13 switches between connection and disconnection of charging/discharging line CHL. ECU 500 sets charging/discharging relay 13 and SMR 14 to a connected state before start of external charging or external power feed. ECU 500 controls SPU 12 while it maintains charging/discharging relay 13 and SMR 14 in the connected state in each of external charging and external power feed. As a tip end (connector) of a power cable connected to EVSE 800 is connected to (plugged into) inlet 11 of parked vehicle 10, vehicle 10 is electrically connected to EVSE 800. Vehicle 10 can charge battery 100 with electric power inputted from EVSE 800 to inlet 11. Vehicle 10 can supply electric power outputted from battery 100 to inlet 11 through EVSE 800 to power grid PG. Charging/discharging line CHL has one end connected to a portion between SMR 14 and PCU 15 and has the other end connected to inlet 11. Without being limited as such, charging/discharging line CHL may have one end connected to a portion between battery 100 and SMR 14.

PV apparatus 410 is a power generation apparatus that converts sunlight into electric power. PV apparatus 410 includes, for example, a solar panel provided on a rooftop of vehicle 10. While SMR 14 is in the connected state, electric power generated by PV apparatus 410 is inputted through power conversion circuit 420 and SMR 14 to battery 100. Power conversion circuit 420 functions as a power conditioner and converts electric power generated by PV apparatus 410 into electric power suitable for charging of battery 100 and outputs electric power to battery 100.

HMI 600A is an HMI mounted on vehicle 10 (vehicle-mounted HMI). HMI 600A includes an input apparatus and a display apparatus. HMI 600A may include a touch panel display. In this embodiment, HMI 600A includes a navigation system.

A mobile terminal 600B is a terminal carried by a user of vehicle 10. Mobile terminal 600B is, for example, a smartphone. The smartphone contains a computer and is equipped with a touch panel display and a speaker. Without being limited as such, a wearable device, an electronic key, or the like can also be adopted as mobile terminal 600B.

ECU 500 includes a processor and a storage. ECU 500 carries out various types of control by execution by the processor, of a program stored in the storage. ECU 500 performs a time counting function. ECU 500 communicates with each of server 20 (Fig. 1) and mobile terminal 600B through communication apparatus 700.

Application software for using a power storage device management service provided by server 20 (Fig. 1) is installed in mobile terminal 600B. Server 20 wirelessly communicates with mobile terminal 600B through communication apparatus 23. Mobile terminal 600B accepts input of information from the user. The user can request server 20 and vehicle 10 to set the SOC of battery 100 at scheduled departure time to a target SOC value by inputting the scheduled departure time and the target SOC value at that time into mobile terminal 600B. Mobile terminal 600B transmits information on the amount of power storage inputted by the user (which will be referred to as a "user plan" below) to each of server 20 and vehicle 10, together with identification information of vehicle 10. The user plan includes the scheduled departure time and the target SOC value inputted by the user.

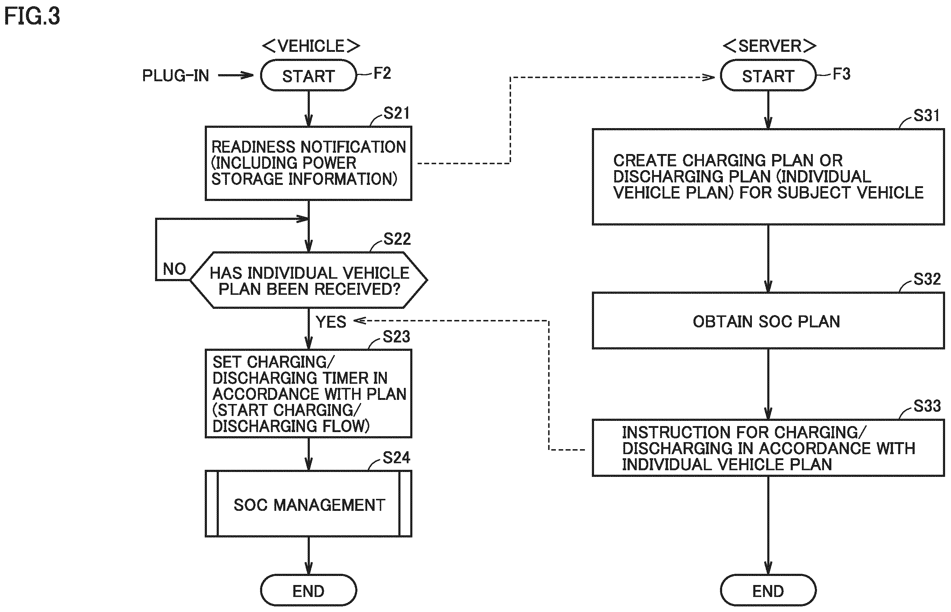

Referring again to Fig. 1, server 20 is configured to manage the power storage device of each vehicle included in the vehicle group. Vehicle information on the vehicle group is stored in storage 22 of server 20. Vehicle information for each vehicle (individual vehicle) is stored in storage 22, as being distinguished based on identification information of the vehicle (a vehicle ID). Each vehicle included in the vehicle group transmits a travel plan set in the navigation system to server 20. Server 20 stores in storage 22 as the vehicle information, the travel plan obtained from each vehicle and power storage information which will be described later (see, for example, S21 in Fig. 3) as well as the user plan obtained from a terminal (for example, mobile terminal 600B) of the user of each vehicle.

Server 20 accepts a request for energy management (which will also be denoted as "EM" below) for power grid PG. Server 20 may receive the EM request from a higher-order server or may receive the EM request from a system in a power market. The requested EM is, for example, power adjustment (for example, adjustment of supply and demand balance) in power grid PG for a prescribed period in the future (which will be referred to as an "EM target period" below). Server 20 performs requested EM by causing the plurality of vehicles included in the vehicle group to operate as distributed energy resources (DERs). Server 20 may have the vehicle group function as a virtual power plant (VPP).

When server 20 receives the EM request, it starts a process flow F1 shown in a flowchart in Fig. 1. "S" in the flowchart means a step.

In S11, server 20 makes movement prediction (action prediction) for each vehicle included in the vehicle group, based on a travel plan (for example, a point of departure, time of departure, a destination, time of arrival, a travel route to the destination, or the like) obtained from each vehicle included in the vehicle group. Server 20 obtains a movement schedule of each vehicle (a position of the vehicle in the future) through this movement prediction. Server 20 may predict the movement schedule of each vehicle further based on the user plan for each vehicle. Server 20 may predict the SOC (amount of power storage) at each of the point of departure and the destination based on the power storage information and the user plan for each vehicle included in the vehicle group.

In S12, server 20 creates a plan for EM by the vehicle group, based on a result of movement prediction (S11). The EM plan refers to a charging/discharging plan in accordance with requested EM. Server 20 specifies a plurality of EM participating vehicles based on a predicted movement schedule of each vehicle. The EM participating vehicles are vehicles predicted to be in a grid connected state for at least a part of the EM target period. Server 20 then creates the EM plan such that the vehicle group (in particular, the plurality of EM participating vehicles included in the vehicle group) performs EM requested in the EM target period. In this embodiment, a state in which the vehicle is electrically connected to power grid PG through the EVSE corresponds to the "grid connected state." In contrast, a state in which the vehicle is not electrically connected to power grid PG is referred to as a "grid disconnected state." Transition of the vehicle from the grid disconnected state to the grid connected state (for example, attachment of the power cable of the EVSE to inlet 11) will be referred to as "plug-in" below and transition of the vehicle from the grid connected state to the grid disconnected state (for example, detachment of the electric cable of the EVSE from inlet 11) will be referred to as "plug-out" below.

In this embodiment, each vehicle included in the vehicle group starts a process flow F2 shown in Fig. 3, by being triggered by plug-in. Server 20 may request each EM participating vehicle to perform EM (for example, power adjustment in power grid PG), and only the EM participating vehicle that receives the request in the vehicle group may perform process flow F2. Fig. 3 is a flowchart showing a process flow started when vehicle 10 is connected to (plugged into) an external power feed facility (EVSE 800).

Referring to Fig. 3 together with Fig. 2, in S21, ECU 500 transmits a readiness notification signal to server 20. The readiness notification signal is a signal for notification that vehicle 10 has entered the grid connected state (for example, vehicle 10 has been connected to the external power feed facility). Prior to transmission of the readiness notification signal, ECU 500 obtains the current measurement value of the SOC of battery 100 from BMS 110. ECU 500 then transmits the power storage information that indicates the obtained measurement value of the SOC, the identification information of vehicle 10 (vehicle ID), and specification information of vehicle 10 to server 20, together with the readiness notification signal. The vehicle ID may be a vehicle identification number (VIN). The specification information indicates, for example, charging performance, discharging performance, power generation performance, and a power storage capacity.

Thereafter, in S22, ECU 500 determines whether or not it has received an individual vehicle plan which will be described later from server 20, and while it does not receive the individual vehicle plan (NO in S22), it repeats determination in S22.

When server 20 has received the readiness notification signal from vehicle 10 (which will be referred to as a "subject vehicle" below), it stores various types of information (the specification information and the like) annexed to the readiness notification signal in storage 22, in association with the vehicle ID, and starts a process flow F3. In S31, server 20 creates a charging plan or a discharging plan for the subject vehicle. The charging plan or the discharging plan created in S31 will be referred to as an "individual vehicle plan" below. The individual vehicle plan refers to the charging plan or the discharging plan allocated by server 20 to the subject vehicle to cause the vehicle group to carry out the EM plan (S12 in Fig. 1) described previously. Specifically, the individual vehicle plan refers to a charging plan that indicates a charging schedule in the plan period or a discharging plan that indicates a discharging schedule in the plan period. The plan period may be as long as or shorter than the EM target period. Server 20 creates the individual vehicle plan based on the EM plan, the user plan for the subject vehicle, the power storage information of the subject vehicle, and the specification information of the subject vehicle (for example, rated charging power or rated discharging power of battery 100 and power generation performance of PV apparatus 410). Server 20 creates the individual vehicle plan that can be carried out by the subject vehicle based on the specification information and the power storage information of the subject vehicle. Server 20 may concurrently create the individual vehicle plan and an SOC plan which will be described below such that those plans are consistent with each other.

In following S32, server 20 obtains the SOC plan (power storage plan) for battery 100 with respect to the plan period of the individual vehicle plan and stores the obtained SOC plan in storage 22, in association with the vehicle ID. The SOC plan includes at least one piece of plan data. The plan data indicates combination of time in the plan period and a planned value of the SOC of battery 100 at that time. For example, the SOC plan includes first plan data that indicates combination of start time of the plan period (which will be referred to as "plan start time" below) and a planned value of the SOC of battery 100 at the plan start time (which will be referred to as a "plan start SOC" below) and second plan data that indicates combination of end time of the plan period (which will be referred to as "plan end time" below) and a planned value of the SOC of battery 100 at the plan end time (which will be referred to as a "plan end SOC" below).

Server 20 may determine the plan start SOC and the plan end SOC based on the power storage information of the subject vehicle and the user plan. Server 20 may adopt the SOC measurement value (the amount of power storage at the time of plug-in) indicated in the power storage information as the plan start SOC. Server 20 may determine the plan end SOC based on the target SOC value indicated in the user plan. For example, when the scheduled departure time and the plan end time indicated in the user plan coincide with each other, server 20 may set the target SOC value indicated in the user plan as the plan end SOC. When the scheduled departure time and the plan end time indicated in the user plan deviate from each other, server 20 may determine the plan end SOC based on a difference between those times and the target SOC value indicated in the user plan. How to determine the SOC plan (power storage plan) is not limited as above and the SOC plan may be determined in any manner. The plan end SOC may be set to a value determined regardless of the user plan (for example, a fixed value or a value in accordance with the EM plan).

In succession, in S33, server 20 gives an instruction for charging/discharging (external charging or external power feed) of battery 100 in accordance with the individual vehicle plan. Specifically, server 20 transmits the individual vehicle plan to the subject vehicle. When the subject vehicle receives the individual vehicle plan (YES in S22), in S23, the individual vehicle plan (charging/discharging schedule) is set in ECU 500. Timer charging or timer discharging of battery 100 in accordance with the individual vehicle plan is thus programmed in ECU 500. Timer charging and timer discharging refer to charging and discharging in accordance with a schedule set in advance, respectively.

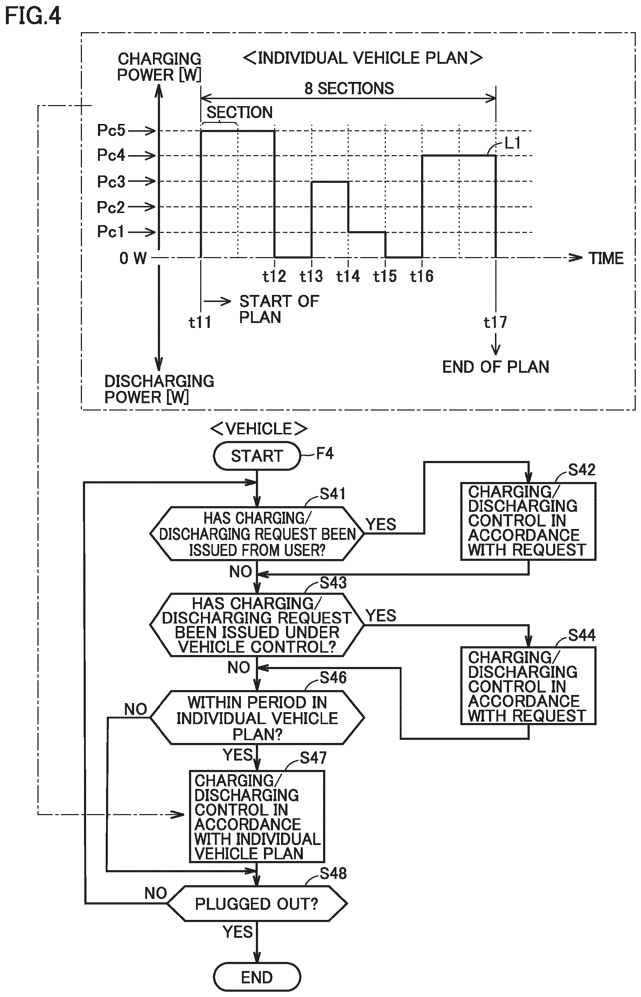

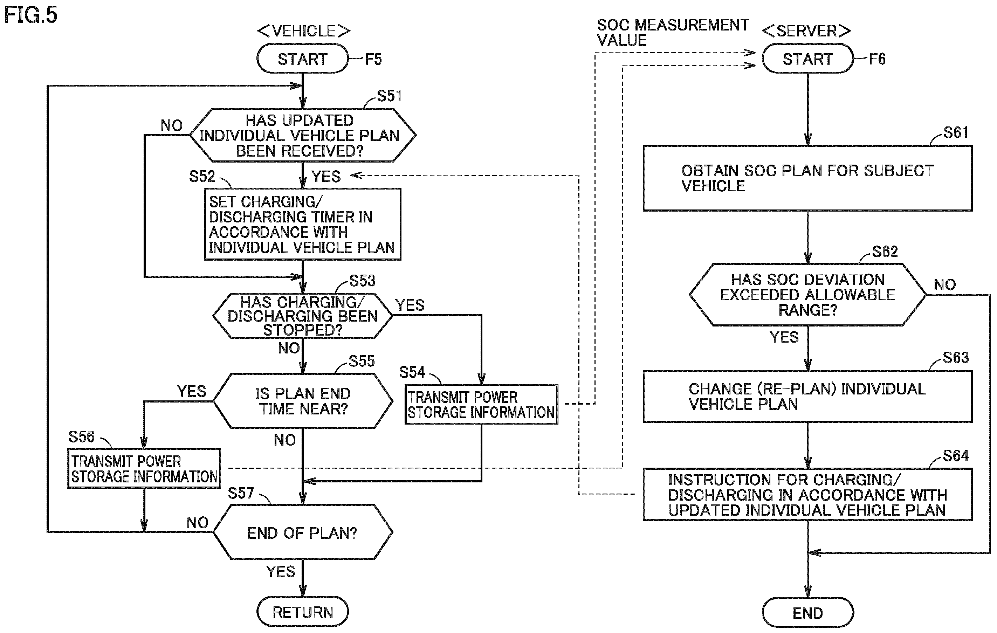

As processing in S23 is performed, in following S24, ECU 500 of the subject vehicle performs a process flow F5 shown in Fig. 5 which will be described later. When the individual vehicle plan is set in ECU 500 in S23, ECU 500 of the subject vehicle starts a process flow F4 shown in Fig. 4 which will be described below. While the subject vehicle is in the grid connected state before the plan end time in the individual vehicle plan, process flows F4 and F5 are performed in parallel. Process flow F4 will initially be described.

Fig. 4 is a flowchart showing charging/discharging control by the vehicle. Referring to Fig. 4 together with Fig. 2, in process flow F4, in S41, ECU 500 determines whether or not it has received a charging/discharging request associated with battery 100 from the user. The user can request external charging of battery 100 to ECU 500, for example, through HMI 600A. This charging request (external charging request) continues until the SOC of battery 100 attains to a prescribed value or larger. The user can request activation of air-conditioner 17 with electric power from battery 100 to ECU 500, for example, through HMI 600A. This discharging request (request to turn on air-conditioning) continues until ECU 500 receives a request for stop of air-conditioning (turn-off of air-conditioning) from the user. When ECU 500 receives the charging/discharging request (for example, the request for external charging or the request for turn-on of air-conditioning) from the user (YES in S41), in S42, ECU 500 carries out charging/discharging control in accordance with the request. ECU 500 controls, for example, at least one of SPU 12 and air-conditioner 17. Thereafter, the process proceeds to S43. When ECU 500 has not received the charging/discharging request from the user (NO in S41), on the other hand, the process proceeds to S43 with S42 being skipped.

In S43, ECU 500 determines whether or not the charging/discharging request associated with battery 100 has been issued under predetermined vehicle control. For example, when the temperature of battery 100 becomes lower than a prescribed value, a request for heating of battery 100 (for example, drive of heater 230) with electric power in battery 100 is issued to ECU 500. This discharging request (request for heating of the battery) continues until the temperature of battery 100 becomes sufficiently high. When the SOC of battery 100 becomes lower than the prescribed value, a request for increase in SOC of battery 100 by external charging of battery 100 is issued to ECU 500. This charging request (request for external charging) continues until the SOC of battery 100 becomes sufficiently high. When ECU 500 has received the charging/discharging request (for example, the request for heating of the battery or the request for external charging) under vehicle control (YES in S43), in S44, ECU 500 carries out charging/discharging control in accordance with the request. ECU 500 controls, for example, at least one of heat medium circuit 200 (including heater 230) and SPU 12. Thereafter, the process proceeds to S46. When ECU 500 has not received the charging/discharging request under vehicle control (NO in S43), on the other hand, the process proceeds to S46 with S44 being skipped.

In S46, ECU 500 determines whether or not the current time is within the plan period of the individual vehicle plan set in ECU 500. The individual vehicle plan is set, for example, in S23 in Fig. 3. The individual vehicle plan set in ECU 500 may be updated in processing in S52 in Fig. 5 which will be described later. When the current time is within the plan period of the individual vehicle plan (YES in S46), in S47, ECU 500 carries out charging/discharging control in accordance with the individual vehicle plan. When the current time is out of the plan period of the individual vehicle plan (NO in S46), on the other hand, the process proceeds to S48 with S47 being skipped. In S48, ECU 500 determines whether or not the subject vehicle has been plugged out. When the subject vehicle maintains the grid connected state (NO in S48), the process returns to the first step (S41).

A line L1 in Fig. 4 represents an exemplary individual vehicle plan. Each of t11 to t17 represents timing and each of Pc1 to Pc5 represents charging power. The individual vehicle plan shown with line L1 is the charging plan that indicates the charging schedule during the plan period from t11 to t17. In this example, the plan period is composed of eight sections. The section corresponds to a unit period. One section has a length, for example, of fifteen minutes. The plan period is set, for example, to two hours. According to the charging schedule indicated in this individual vehicle plan, charging is started (the plan is also started) at t11, charging with charging power Pc5 is performed during a period from t11 to t12, and charging is stopped at t12. Thereafter, charging is resumed at t13, charging with charging power Pc3 is performed during a period from t13 to t14, charging power is changed from Pc3 to Pc1 at t14, and charging is stopped at t15. Charging is then resumed at t16, charging with charging power Pc4 is performed during a period from t16 to t17, and charging ends (the plan also ends) at t17. Pc5 may represent rated charging power (maximum charging power) of battery 100.

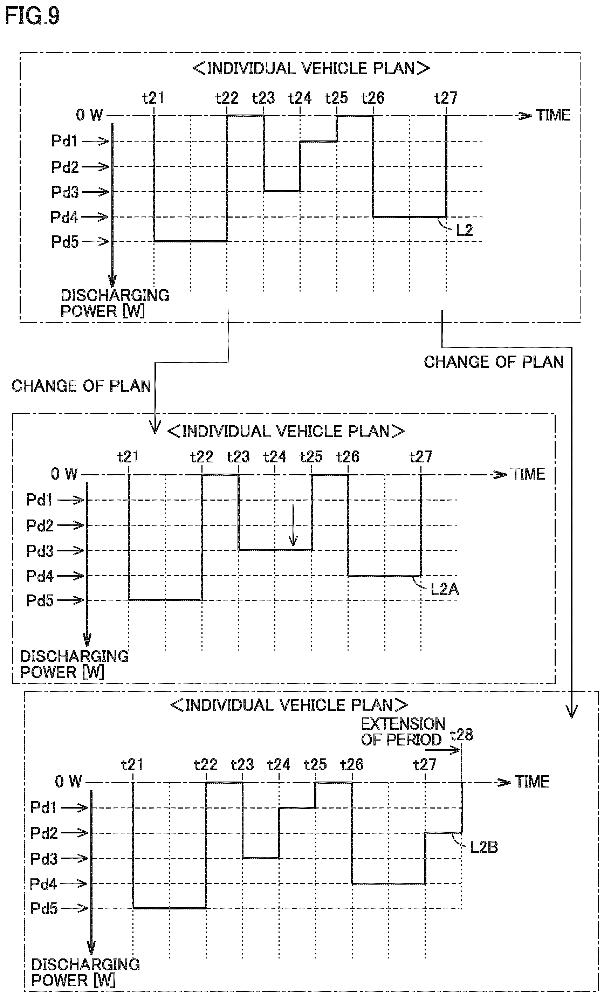

The above example is merely one example of the individual vehicle plan, and the individual vehicle plan is not limited to the plan shown with line L1. For example, at least one of the number of sections included in the plan period and a length of one section may be modified. The number of sections may be smaller than seven, may be not smaller than nine and smaller than fifty, or may be fifty or larger. The length of one section may be shorter than fifteen minutes, may exceed fifteen minutes and be shorter than one hour, or may be one hour or longer. In the individual vehicle plan shown with line L1, charging power is different for each time frame, and the individual vehicle plan indicates transition of charging power as the charging schedule. The charging schedule, however, may be information that indicates timing of on (start)/off (stop) of charging. Charging power corresponding to on of charging may be constant (fixed) during the plan period. The individual vehicle plan may be a discharging plan (see Fig. 9) which will be described later.

When the individual vehicle plan is the charging plan, in S47, ECU 500 carries out charging control of battery 100 in accordance with the set charging schedule. For example, ECU 500 controls SPU 12 such that charging power indicated in the individual vehicle plan is inputted from power grid PG through the EVSE to battery 100 of the subject vehicle. When the individual vehicle plan is the discharging plan, in S47, ECU 500 carries out discharging control of battery 100 in accordance with the set discharging schedule. For example, ECU 500 controls SPU 12 such that discharging power indicated in the individual vehicle plan is supplied from battery 100 of the subject vehicle through the EVSE to power grid PG. When ECU 500 has received at least one of the charging/discharging request from the user and the charging/discharging request under vehicle control within the plan period of the individual vehicle plan (YES in at least one of S41 and S43), ECU 500 performs charging/discharging (S42, S44) of battery 100 in accordance with the charging/discharging request while ECU 500 performs charging or discharging of battery 100 in accordance with the individual vehicle plan (S47).

When the plan period of the individual vehicle plan has elapsed (NO in S46), charging/discharging (S47) of battery 100 in accordance with the individual vehicle plan is no longer performed. When the subject vehicle then enters the grid disconnected state (YES in S48), process flow F4 ends.

Process flow F5 performed in S24 in Fig. 3 will now be described. Fig. 5 is a flowchart showing processing involved with management (SOC management) of the power storage device. Referring to Fig. 5 together with Fig. 2, in S51, ECU 500 determines whether or not it has received a later-described updated individual vehicle plan (S64) from server 20. When ECU 500 has not received the updated individual vehicle plan (NO in S51), the process proceeds to S53 with S52 being skipped.

In S53, ECU 500 determines whether or not charging/discharging of battery 100 has been stopped. ECU 500 may determine, for example, whether or not charging (for example, external charging) of battery 100 that had been performed with charging power equal to or more than a prescribed value has been stopped. ECU 500 may determine whether or not discharging (for example, external power feed) of battery 100 that had been performed with discharging power equal to or more than a prescribed value has been stopped. When stop of charging/discharging (for example, external charging or external power feed) has been sensed (YES in S53), in S54, ECU 500 obtains the current measurement value of the SOC of battery 100 from BMS 110 and transmits to server 20, together with the identification information of the subject vehicle, power storage information that indicates the obtained measurement value of the SOC. Thereafter, the process proceeds to S57.

When stop of charging/discharging has not been sensed (NO in S53), in S55, ECU 500 determines whether or not timing a prescribed time period (for example, five minutes) before the plan end time of the set individual vehicle plan has come. When determination as YES is made in S55, the process proceeds to S56. Determination as YES in S55 means that a time period that remains before end of the individual vehicle plan is equal to or shorter than a prescribed time period, that is, the plan end time is near. Processing in S56 is the same as processing in S54. When the power storage information is transmitted in S56, the process returns to the first step (S51). When determination as NO is made in S55, on the other hand, the process proceeds to S57.

In S57, ECU 500 determines whether or not the plan end time of the individual vehicle plan has come. When the plan end time has not yet come (NO in S57), the process returns to S51. Each time ECU 500 senses stop of charging/discharging before the plan start time of the individual vehicle plan and within the plan period of the individual vehicle plan, it transmits the power storage information to server 20 through the processing in S54.

Each time server 20 receives the power storage information transmitted in the processing in S54 or S56, it performs a process flow F6 for the subject vehicle. In S61, server 20 obtains the SOC plan (S32 in Fig. 3) for the subject vehicle from storage 22. Server 20 calculates an SOC planned value corresponding to timing (time of measurement of the SOC measurement value) of reception of the power storage information as necessary. In following S62, server 20 determines whether or not the SOC (amount of power storage) in battery 100 of the subject vehicle has deviated from the SOC plan beyond the allowable range.

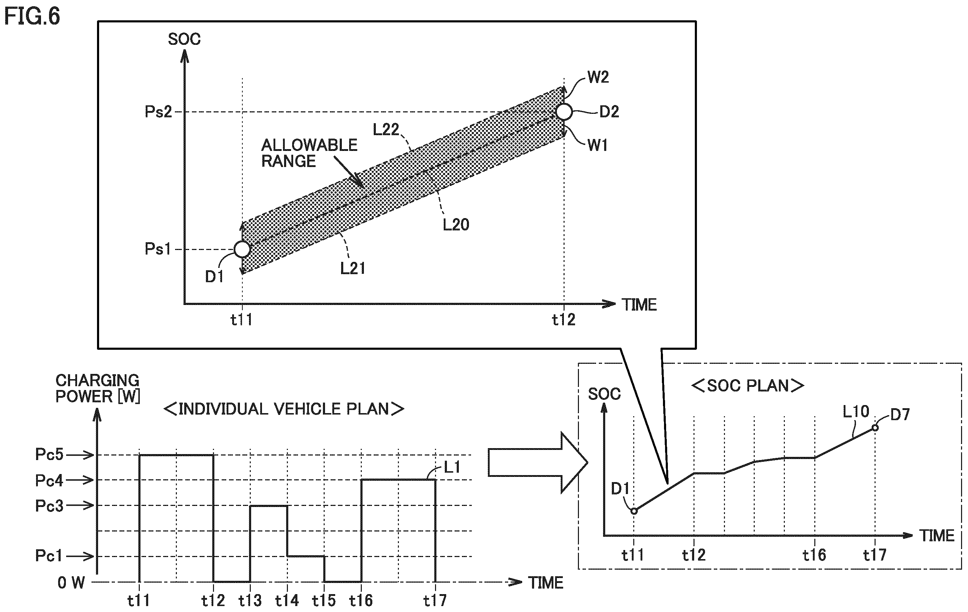

Fig. 6 is a diagram for illustrating an exemplary SOC plan and an exemplary allowable range. Referring to Fig. 6, server 20 can obtain plan data at time after the plan start time (t11) and before the plan end time (t17) with the use of the individual vehicle plan (line L1) and at least one of first plan data D1 and second plan data D7. Server 20 may predict variation in SOC of battery 100 with lapse of time, for example, based on transition of charging power shown with line L1. Specifically, first plan data D1 indicates combination of the plan start time (t11) and the plan start SOC (Ps1). During a period from t11 to t12, charging power Pc5 is inputted to battery 100, and accordingly, the SOC of battery 100 increases. Therefore, server 20 can obtain plan data D2 at t12 based on first plan data D1 and charging power Pc5. Plan data D2 indicates combination of t12 and an SOC planned value (Ps2) at t12. Server 20 can also obtain continuous plan data on the SOC plan (a line L20) during the period from t11 to t12. Similarly, server 20 can obtain continuous plan data (a line L10) during the plan period (t11 to t17) with the use of the individual vehicle plan (line L1) and first plan data D1. When charging power remains the same (constant) within the plan period, server 20 can obtain the plan data at any time within the plan period by linear interpolation between first plan data D1 and second plan data D7 on the SOC plan.

The allowable range for the SOC plan (plan data) can be determined in any manner. In this embodiment, server 20 determines the allowable range based on the specification information of the subject vehicle. Specifically, server 20 obtains, based on the specification information of the subject vehicle, a maximum amount of electric power (which will be referred to as a "first amount of adjustment" below) chargeable to battery 100 in the subject vehicle per unit period (for example, one section) and a maximum amount of electric power (which will be referred to as a "second amount of adjustment" below) dischargeable from battery 100 in the subject vehicle per unit period (for example, one section). Server 20 then sets a value calculated by subtracting an amount of change W1 in SOC corresponding to the first amount of adjustment from the SOC plan (plan data), as a lower limit value (a line L21) of the allowable range. Server 20 sets a value calculated by adding an amount of change W2 in SOC corresponding to the second amount of adjustment to the SOC plan (plan data), as an upper limit value (a line L22) of the allowable range. A range from the lower limit value shown with line L21 to the upper limit value shown with line L22 corresponds to the allowable range.

Referring again to Fig. 5 together with Fig. 2, when server 20 has received the power storage information within the plan period of the individual vehicle plan for the subject vehicle, in S62, server 20 obtains the SOC planned value at the current time (timing of reception of the power storage information) with the method (see Fig. 6) described above. Server 20 then determines whether or not the SOC of battery 100 of the subject vehicle has deviated from the SOC plan beyond the allowable range based on whether or not the SOC measurement value indicated in the power storage information has deviated from the allowable range (see Fig. 6) at the current time in the SOC plan. Determination as having deviated means that a degree of deviation between the measurement value of the SOC at the current time (SOC measurement time) and the planned value of the SOC has exceeded the allowable range.

When server 20 has received the power storage information before the plan start time of the individual vehicle plan for the subject vehicle, in S62, server 20 determines whether or not the SOC of battery 100 of the subject vehicle has deviated from the SOC plan beyond the allowable range based on whether or not the SOC measurement value indicated in the power storage information is out of the allowable range (see Fig. 6) at the plan start time of the SOC plan. Determination as having deviated means that the degree of deviation between the SOC measurement value at the time of end of external charging of battery 100 performed before the plan start time and the plan start SOC indicated in the SOC plan has exceeded the allowable range.

In this embodiment, the subject vehicle includes PV apparatus 410 (Fig. 2). An amount of power generation per unit time by PV apparatus 410 may fluctuate depending on a climate condition. Therefore, the SOC (amount of power storage) of battery 100 may deviate from the SOC plan (power storage plan) also due to fluctuation in amount of generated electric power inputted from PV apparatus 410 to battery 100.

The degree of deviation can be expressed, for example, by a difference or a ratio. As the difference (absolute value) is larger, the degree of deviation is higher. As the ratio is closer to one, the degree of deviation is lower. Server 20 may calculate the degree of deviation between the measurement value and the planned value of the SOC (amount of power storage) in accordance with a prescribed mathematical expression and determine whether or not the calculated degree of deviation is within a prescribed allowable range.

When the SOC is determined as not having deviated in S62 (NO in S62), process flow F6 ends. When the SOC is determined as having deviated in S62 (YES in S62), on the other hand, server 20 performs processing in S63 and S64 which will be described below, and then quits process flow F6.

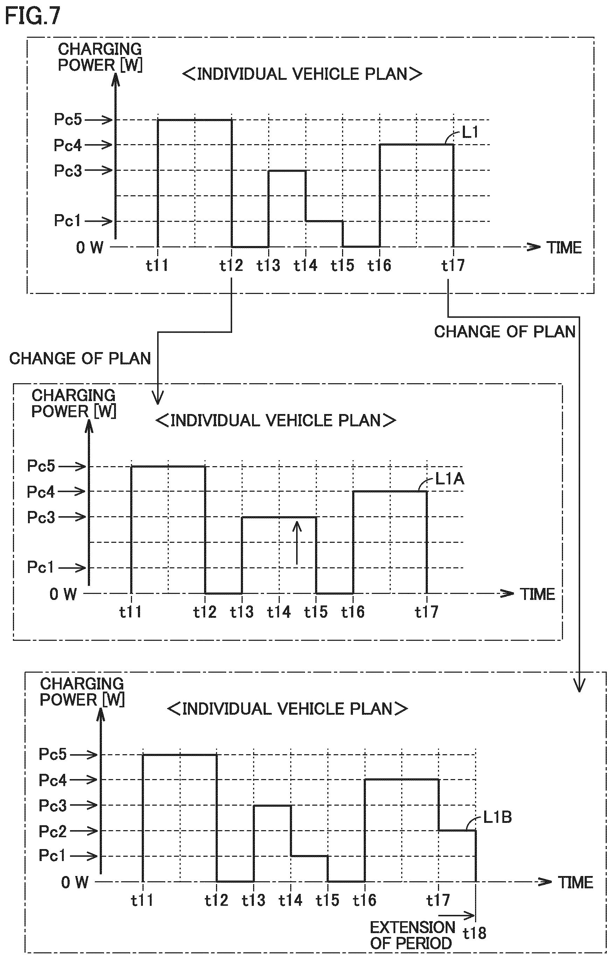

In S63, server 20 modifies the individual vehicle plan for the subject vehicle. In this embodiment, server 20 modifies the individual vehicle plan for the subject vehicle based on the power storage information obtained from the subject vehicle and the SOC plan for the subject vehicle. Processing in S63 will be described below with reference to Figs. 7 to 9.

Fig. 7 is a diagram showing a first example and a second example of modification of the charging plan. The charging plan shown with line L1 in Fig. 7 represents the individual vehicle plan for the subject vehicle yet to be modified.

In the first example, at t12, the subject vehicle senses stop of charging (YES in S53 in Fig. 5) and transmits the power storage information to server 20. When server 20 receives the power storage information, it determines the amount of power storage (S62 in Fig. 5). When determination as having deviated is made, the individual vehicle plan is modified (S63 in Fig. 5). When the SOC measurement value indicated in the power storage information is smaller than the lower limit value of the allowable range, server 20 modifies the individual vehicle plan for the subject vehicle to a charging plan shown with a line L1A, for example, to compensate for shortage of the amount of power storage in battery 100 relative to the SOC plan. The modified individual vehicle plan (line L1A) is higher in charging power during a period from t14 to t15 than the yet-to-be modified individual vehicle plan (line L1). Without being limited as such, server 20 may increase the amount of power storage in battery 100 by modifying the charging plan to change a charging stop period (t15 to t16) in the charging plan to a charging on-going period.

In the second example, the subject vehicle transmits the power storage information to server 20 at timing a prescribed time period before the plan end time (t17) of the individual vehicle plan (line L1) (YES in S55 in Fig. 5). When server 20 receives the power storage information, it determines the amount of power storage (S62 in Fig. 5). When determination as having deviated is made, the individual vehicle plan is modified (S63 in Fig. 5). When the SOC measurement value indicated in the power storage information is smaller than the lower limit value of the allowable range, server 20 extends the plan period, for example, to compensate for shortage of the amount of power storage in battery 100 relative to the SOC plan. Specifically, server 20 modifies the individual vehicle plan for the subject vehicle to a charging plan shown with a line L1B. In the modified individual vehicle plan (line L1B), the plan end time (t18) is set at time later than the plan end time (t17) of the yet-to-be-modified individual vehicle plan (line L1), and charging with charging power Pc2 is performed during a period from t17 to t18. When the amount of power storage is determined (S62 in Fig. 5) during the period from t17 to t18, server 20 may set a yet-to-be-modified plan end SOC (the SOC planned value at t17) and a modified plan end SOC (the SOC planned value at t18) to be equal to each other. Server 20 may then obtain the SOC planned value during the period from t17 to t18 based on the SOC measurement value indicated in the power storage information, the modified plan end SOC, and charging power (Pc2) indicated in the modified individual vehicle plan (line L1B).

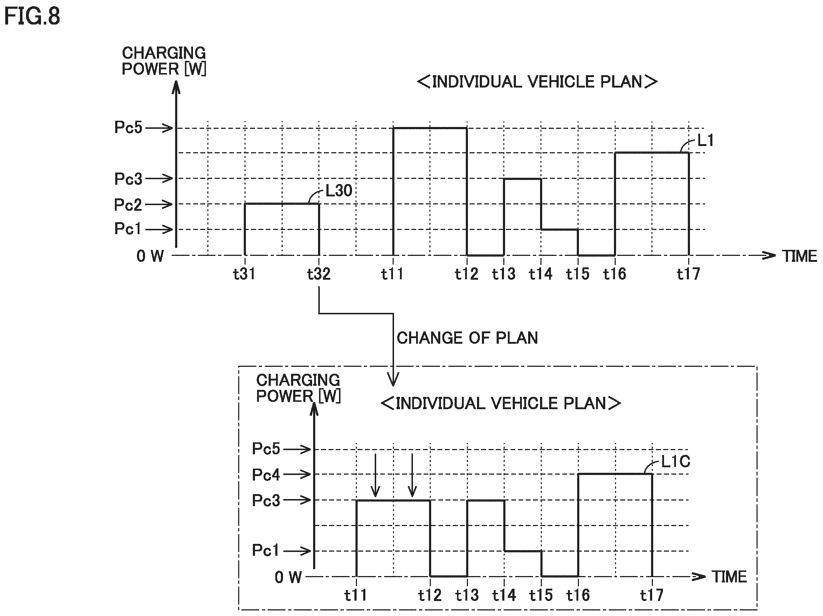

Fig. 8 is a diagram showing a third example of modification of the charging plan. The charging plan shown with line L1 in Fig. 8 is the yet-to-be-modified individual vehicle plan for the subject vehicle.

In the third example, the subject vehicle starts external charging of battery 100 as shown with a line L30 at timing (t31) before the plan start time (t11) of the individual vehicle plan (line L1). When external charging ends at t32 (YES in S53 in Fig. 5), the subject vehicle transmits the power storage information to server 20. When server 20 receives the power storage information, it determines the amount of power storage (S62 in Fig. 5). When determination as having deviated is made, the individual vehicle plan is modified (S63 in Fig. 5). With increase in SOC of battery 100 owing to external charging before the plan period, the SOC measurement value indicated in the power storage information may become larger than the upper limit value of the allowable range. In such a case, server 20 modifies the individual vehicle plan for the subject vehicle to a charging plan shown with a line L1C, for example, to decrease excess of the amount of power storage in battery 100 over the SOC plan. The modified individual vehicle plan (line L1C) is lower in charging power during the period from t11 to t12 than the yet-to-be-modified individual vehicle plan (line L1).

Fig. 9 is a diagram showing a first example and a second example of modification of the discharging plan. A discharging plan shown with a line L2 in Fig. 9 is the yet-to-be-modified individual vehicle plan for the subject vehicle. Each of t21 to t27 represents timing and each of Pd1 to Pd5 represents discharging power. The individual vehicle plan shown with line L2 is the discharging plan that indicates the discharging schedule during the plan period from t21 to t27. The plan period is composed of eight sections similarly to the charging plan (line L1 in Fig. 4) described previously. According to the discharging schedule indicated in this individual vehicle plan, discharging is started (the plan is also started) at t21, discharging at discharging power Pd5 is performed during a period from t21 to t22, and discharging is stopped at t22. Thereafter, discharging is resumed at t23, discharging is performed at discharging power Pd3 during a period from t23 to t24, discharging power is changed to Pd1 at t24, and discharging is stopped at t25. Discharging is resumed at t26, discharging is performed at discharging power Pd4 during a period from t26 to t27, and discharging ends (the plan also ends) at t27. Pd5 may represent rated discharging power (maximum discharging power) from battery 100.

In the first example, at t22, the subject vehicle senses stop of discharging (YES in S53 in Fig. 5) and transmits the power storage information to server 20. When server 20 receives the power storage information, it determines the amount of power storage (S62 in Fig. 5). When determination as having deviated is made, the individual vehicle plan is modified (S63 in Fig. 5). When the SOC measurement value indicated in the power storage information is larger than the upper limit value of the allowable range, server 20 modifies the individual vehicle plan for the subject vehicle to a discharging plan shown with a line L2A, for example, to decrease excess of the amount of power storage in battery 100 over the SOC plan. The modified individual vehicle plan (line L2A) is larger in discharging power during a period from t24 to t25 than the yet-to-be-modified individual vehicle plan (line L2). Without being limited as such, server 20 may decrease the amount of power storage in battery 100 by modifying the discharging plan to change a discharging stop period (t25 to t26) to a discharging on-going period in the discharging plan.

In the second example, the subject vehicle transmits the power storage information to server 20 at timing a prescribed time period before the plan end time (t27) of the individual vehicle plan (line L2) (YES in S55 in Fig. 5). When server 20 receives the power storage information, it determines the amount of power storage (S62 in Fig. 5). When determination as having deviated is made, the individual vehicle plan is modified (S63 in Fig. 5). When the SOC measurement value indicated in the power storage information is larger than the upper limit value of the allowable range, server 20 extends the plan period, for example, to decrease excess of the amount of power storage in battery 100 over the SOC plan. Specifically, server 20 modifies the individual vehicle plan for the subject vehicle to a discharging plan shown with a line L2B. In the modified individual vehicle plan (line L2B), the plan end time (t28) is set at time later than the plan end time (t27) of the yet-to-be-modified individual vehicle plan (line L2) and discharging at discharging power Pd2 is performed during a period from t27 to t28.

Referring again to Fig. 5 together with Fig. 2, in S64, server 20 instructs the subject vehicle to perform charging/discharging of discharge battery 100 in accordance with the updated individual vehicle plan. Specifically, server 20 transmits the updated individual vehicle plan (the individual vehicle plan modified in S63) to the subject vehicle. When the subject vehicle receives the updated individual vehicle plan (YES in S51), in S52, the updated individual vehicle plan (charging/discharging schedule) is set in ECU 500. In S47 in Fig. 4, charging/discharging control in accordance with the updated individual vehicle plan is thus carried out.

When processing in S52 is performed, the process proceeds to S53. When the individual vehicle plan is modified, determination as to end of the plan (S57) is made for the modified individual vehicle plan. When the plan end time has not yet come (NO in S57), process flow F5 is repeatedly performed. When the plan end time comes, process flow F5 (S24 in Fig. 3) ends and process flow F2 (Fig. 3) also ends.

As described above, the method of managing the power storage device according to this embodiment is the method of managing battery 100 (power storage device) mounted on vehicle 10 and includes processing according to process flows F1 to F6. This method includes instructing vehicle 10 to charge battery 100 in accordance with the charging plan that indicates the charging schedule in the plan period (S33 in Fig. 3), obtaining the power storage plan for battery 100 with respect to the plan period (S32 in Fig. 3), obtaining the measurement value of the amount of power storage in battery 100 (S54 and S56 in Fig. 5), modifying the charging plan when the obtained measurement value of the amount of power storage in battery 100 deviates from the power storage plan beyond the allowable range (S63 in Fig. 5), and instructing vehicle 10 to charge battery 100 in accordance with the modified charging plan (S64 in Fig. 5). According to such a method, the charging plan is modified when the amount of power storage in battery 100 deviates from the power storage plan beyond the allowable range as a result of charging and/or discharging of battery 100 in vehicle 10 not scheduled in the plan. Great deviation of the amount of power storage in battery 100 from the plan is thus suppressed.

The form above is modifiable. For example, in the embodiment, the processing according to the method is performed by execution by at least one processor, of a program stored in at least one storage. Such processing may be performed only by hardware (electronic circuitry) rather than software. A modification of the embodiment will be described below.

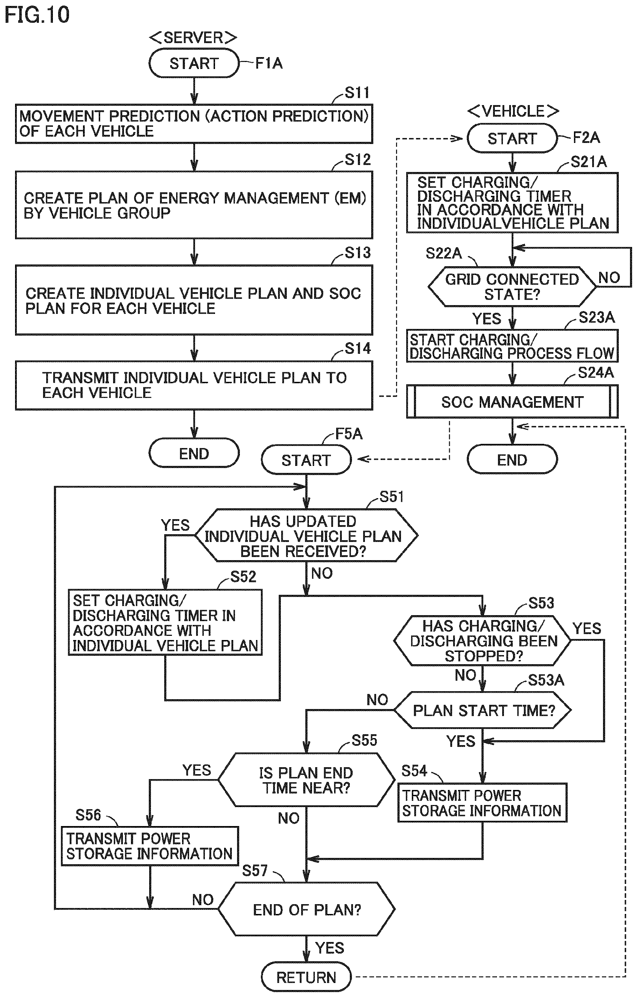

Fig. 10 is a diagram showing a process flow according to a first modification. Server 20 may perform a process flow F1A instead of process flow F1 (Fig. 1) and vehicle 10 may perform process flows F2A and F5A instead of process flows F2 (Fig. 3) and F5 (Fig. 5). The specification information of each vehicle included in the vehicle group may be registered in advance in server 20 (storage 22).

Referring to Fig. 10, process flow F1A is a process flow obtained by addition of S13 and S14 to process flow F1 (Fig. 1). In S13, server 20 creates the individual vehicle plan and the SOC plan for each EM participating vehicle with the method in accordance with S31 and S32 in Fig. 3. In this modification, server 20 creates the individual vehicle plan and the SOC plan before the EM participating vehicle enters the grid connected state. For example, server 20 predicts a state at the time of plug-in of the EM participating vehicle based on a result of movement prediction (S11) and creates the individual vehicle plan and the SOC plan based on the predicted state at the time of plug-in. Server 20 may set the predicted SOC of battery 100 at the time of plug-in as the plan start SOC. The individual vehicle plan is created for each EM participating vehicle. In following S14, server 20 transmits the corresponding individual vehicle plan to each EM participating vehicle.

When the EM participating vehicle receives the individual vehicle plan, it starts process flow F2A. In S21A, the EM participating vehicle that has received that individual vehicle plan sets the individual vehicle plan (charging/discharging schedule) in ECU 500 thereof. In this modification, the EM participating vehicle in which the individual vehicle plan is set in S21A will be referred to as a "subject vehicle." In following S22A, ECU 500 determines whether or not the subject vehicle is in the grid connected state. While the subject vehicle is in the grid disconnected state (NO in S22A), determination in S22A is repeated. When the subject vehicle is determined as being in the grid connected state (YES in S22A), on the other hand, in following S23A, process flow F4 shown in Fig. 4 is started, and in further following S24A, process flow F5A is started. While the subject vehicle is in the grid connected state before the plan end time of the individual vehicle plan, process flows F4 and F5A are performed in parallel.

Process flow F5A is a process flow obtained by addition of S53A to process flow F5 (Fig. 5). When determination as NO is made in S53, processing in S53A is performed. In S53A, ECU 500 determines whether or not the set plan start time of the individual vehicle plan has come. In this modification, when determination as YES is made in any one of S53 and S53A, the power storage information (SOC measurement value) is transmitted from the subject vehicle to server 20 in processing in S54. When server 20 receives the power storage information from the subject vehicle, it performs process flow F6 shown in Fig. 5. In this modification, the amount of power storage is determined at the plan start time (S62 in Fig. 5). When accuracy in prediction of the SOC of battery 100 at the time of plug-in based on the result of movement prediction (S11) is low, the degree of deviation between the SOC measurement value at the plan start time and the SOC planned value tends to exceed the allowable range.

In the embodiment (see Fig. 5), when a prescribed condition (which will be referred to as a "transmission condition" below) is satisfied, the vehicle transmits the power storage information that indicates the measurement value of the amount of power storage in the power storage device to server 20 (management apparatus). When server 20 receives the power storage information from the vehicle, server 20 determines whether or not the amount of power storage in the power storage device has deviated from the power storage plan beyond the allowable range (S62), and when determination as having deviated is made, server 20 modifies the individual vehicle plan based on the power storage information and the power storage plan (S63).

For example, when the vehicle performs charging of the power storage device before the plan period, the transmission condition is satisfied (YES in S53) at the time of end of charging of that power storage device, and the power storage information is transmitted in S54. The transmission condition is satisfied (YES in S53) also when charging of the power storage device stops within the plan period, and the power storage information is transmitted in S54. The transmission condition is satisfied (YES in S55) also when timing a prescribed time period before the plan end time (for example, timing just before end of the plan) comes, and the power storage information is transmitted in S56. In the first modification (see Fig. 10), the transmission condition is satisfied (YES in S53A) also when the plan start time comes, and the power storage information is transmitted in S54. A requirement for satisfaction of the transmission condition is not limited to the above.

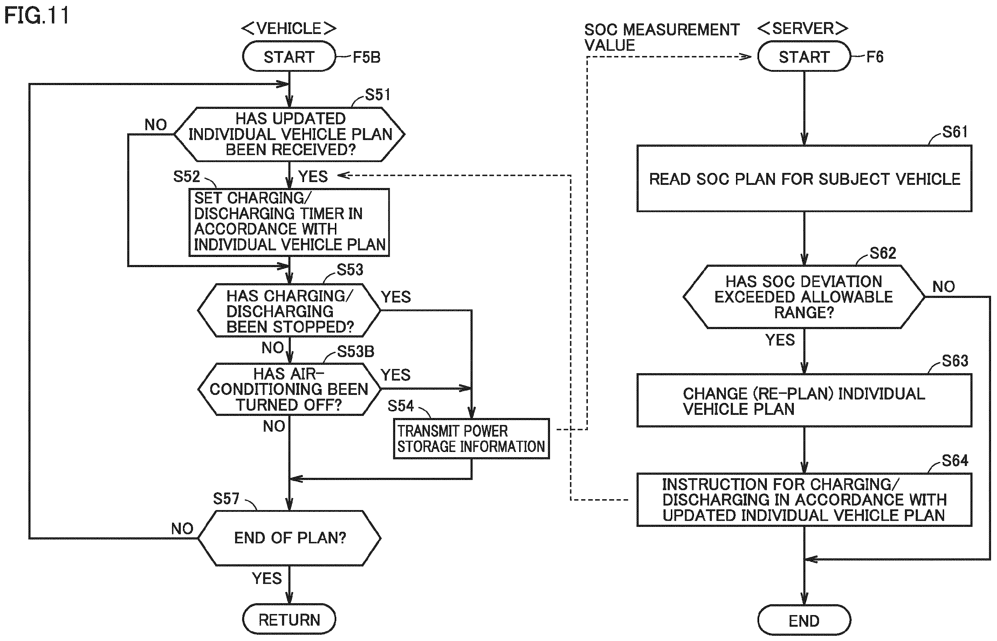

Fig. 11 is a diagram showing a process flow according to a second modification. Vehicle 10 may perform a process flow F5B shown in Fig. 11 instead of process flow F5 (Fig. 5). Process flow F5B is the same as process flow F5 except that S53B is adopted instead of S55 and S56 (Fig. 5). Referring to Fig. 11, in S53B, ECU 500 determines whether or not air-conditioner 17 has been turned off. When air-conditioner 17 makes transition from an active state to an inactive state, determination as YES is made in S53B. In this modification, when determination as YES is made in one of S53 and S53B, the process proceeds to S54. In other words, the transmission condition is satisfied (YES in S53B) when air-conditioner 17 is turned off, and the power storage information is transmitted in S54.

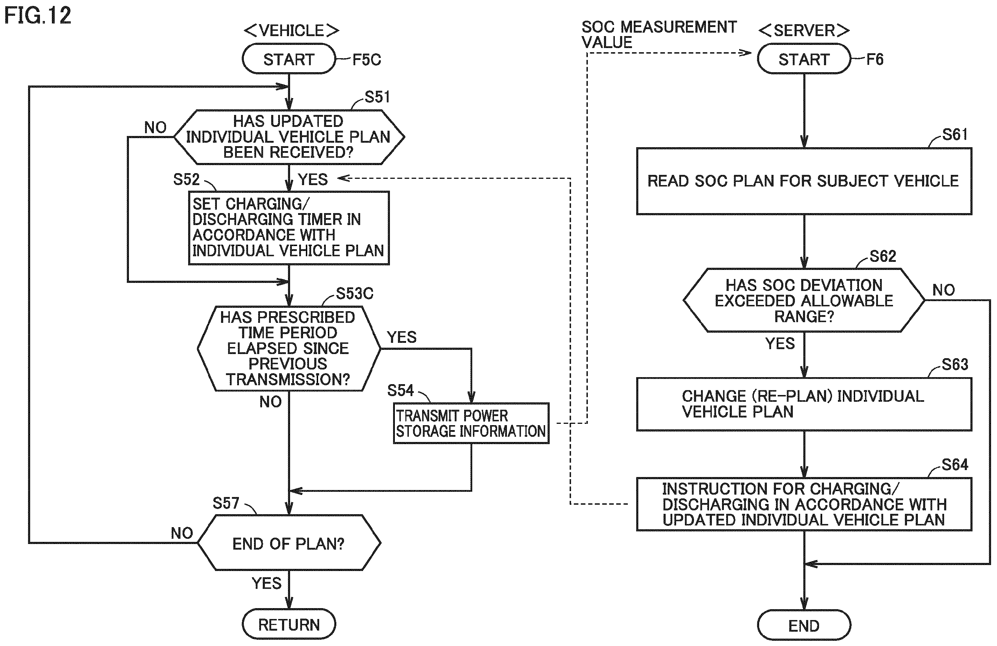

Fig. 12 is a diagram showing a process flow according to a third modification. Vehicle 10 may perform a process flow F5C shown in Fig. 12 instead of process flow F5 (Fig. 5). Process flow F5C is the same as process flow F5 except that S53C is adopted instead of S53, S55, and S56 (Fig. 5). Referring to Fig. 12, in S53C, ECU 500 determines whether or not a prescribed time period has elapsed since previous transmission of the power storage information. In an initial processing routine, whether or not a prescribed time period has elapsed since transmission at the time of plug-in (S21 in Fig. 3) is determined. Thereafter, each time the prescribed time period elapses, determination as YES is made in S53C. When determination as YES is made in S53C, the process proceeds to S54. In this modification, the transmission condition is satisfied (YES in S53C) each time the prescribed time period elapses, and the power storage information is transmitted in S54.

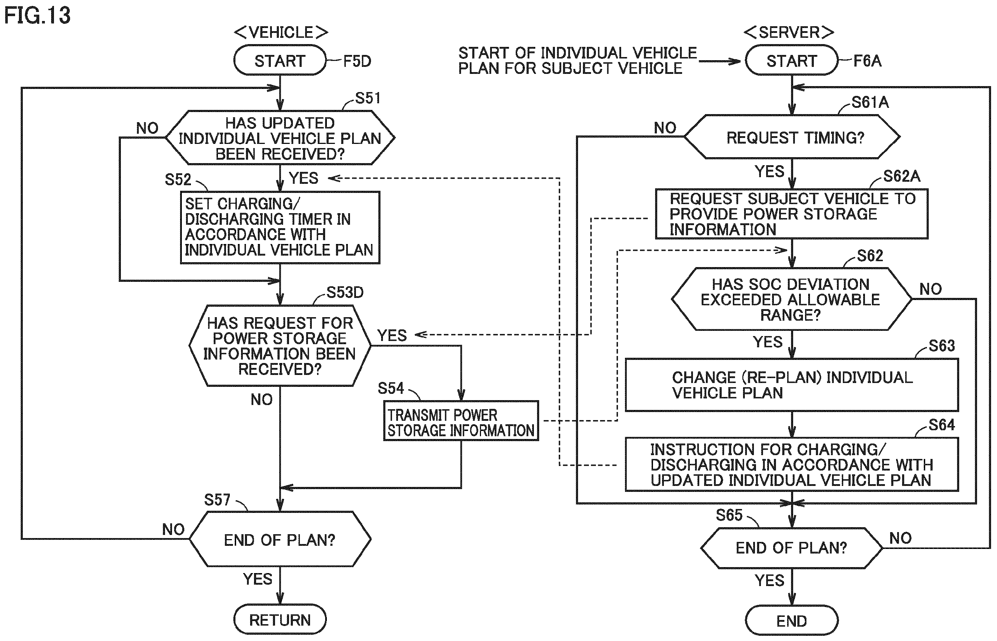

Fig. 13 is a diagram showing a process flow according to a fourth modification. Server 20 may perform a process flow F6A instead of process flow F6 (Fig. 5) and vehicle 10 may perform a process flow F5D instead of process flow F5 (Fig. 5).

Referring to Fig. 13, server 20 performs process flow F6A for each vehicle included in the vehicle group. Server 20 starts process flow F6A at the plan start time based on the individual vehicle plan for the subject vehicle and keeps performing process flow F6A until the plan end time comes. Specifically, server 20 determines whether or not the plan end time has come in the last step (S65), and when it determines that the plan end time has not yet come (NO in S65), the process returns to the first step (S61A). When the plan end time has come (YES in S65), process flow F6A ends. Process flow F6A is the same as process flow F6 except that S65 is added as the last step and S61A and S62A are adopted instead of S61 (Fig. 5). In S61A, whether or not prescribed request timing has come is determined, and while the request timing does not come (NO in S61A), determination in S61A is repeated. When the request timing has come (YES in S61A), in S62A, server 20 requests the subject vehicle to provide the power storage information (SOC measurement value). The subject vehicle transmits the power storage information (SOC measurement value) to server 20 in response to this request (S54 which will be described later). Server 20 determines the amount of power storage (S62) based on the received power storage information.

The request timing can freely be set within the plan period of the individual vehicle plan. For example, timing of end of each section within the plan period of the individual vehicle plan may be set as the request timing. At least one of timing of stop of charging or discharging in accordance with the individual vehicle plan and timing a prescribed time period before the plan end time may be set as the request timing.

Process flow F5D is the same as process flow F5 except that S53D is adopted instead of S53, S55, and S56 (Fig. 5). In S53D, ECU 500 determines whether or not a request for the power storage information has been issued from server 20. Each time the request for the power storage information is issued from server 20, determination as YES is made in S53D. When determination as YES is made in S53D, the process proceeds to S54. In this modification, the transmission condition is satisfied (YES in S53D) when the request for the power storage information is issued from server 20, and the power storage information is transmitted in S54.

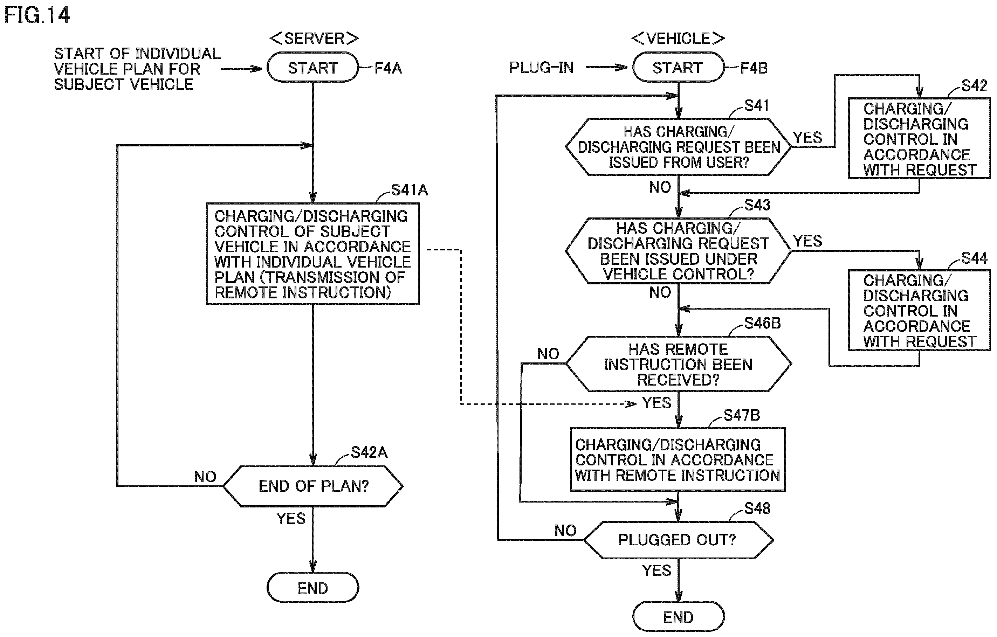

In the embodiment and each modification, when the vehicle is instructed by server 20 (management apparatus) to charge or discharge the power storage device in accordance with the individual vehicle plan (the charging plan or the discharging plan), the vehicle sets the charging schedule or the discharging schedule indicated in the individual vehicle plan in ECU 500 (controller) (S23 in Fig. 3 and S21A in Fig. 10). ECU 500 then carries out charging/discharging control (charging control or discharging control) of the power storage device in accordance with the set schedule (individual vehicle plan) (S47 in Fig. 4). Without being limited to such a control scheme, server 20 (management apparatus) may have the vehicle charge or discharge the power storage device in accordance with the individual vehicle plan under remote control. Fig. 14 is a diagram showing a process flow according to a fifth modification. Server 20 may perform a process flow F4A shown in Fig. 14 for each vehicle included in the vehicle group. Vehicle 10 may perform a process flow F4B shown in Fig. 14 instead of process flow F4 (Fig. 4).

In this modification, server 20 starts process flow F4A at the plan start time based on the individual vehicle plan for the subject vehicle, and in S41A, server 20 transmits to the subject vehicle, a charging/discharging instruction (remote instruction) in accordance with the individual vehicle plan. The charging/discharging instruction is an instruction for having the subject vehicle perform charging/discharging (external charging or external power feed) of battery 100 in accordance with the individual vehicle plan under remote control. The charging/discharging instruction is a charging instruction or a discharging instruction. The charging instruction requests charging of battery 100 with electric power indicated in the charging plan from power grid PG (external power supply). The discharging instruction requests discharging of electric power indicated in the discharging plan from battery 100 to power grid PG (external power supply). The charging/discharging instruction may be a signal informing the subject vehicle of charging power or discharging power indicated in the individual vehicle plan. After the charging/discharging instruction is transmitted, in S42A, server 20 determines whether or not the plan end time has come, and when server 20 determines that the plan end time has not yet come (NO in S42A), the process returns to the first step (S41A). Transmission of the charging/discharging instruction (S41A) is repeated within the plan period of the individual vehicle plan. Server 20 sequentially transmits the charging/discharging instruction to the subject vehicle. Server 20 may transmit the charging/discharging instruction (remote instruction) to the subject vehicle at timing of start of each section within the plan period of the individual vehicle plan. When the plan end time comes (YES in S42A), process flow F4A ends.

In this modification, each vehicle included in the vehicle group starts process flow F4B by being triggered by plug-in. Process flow F4B is the same as process flow F4 except that S46B and S47B are adopted instead of S46 and S47 (Fig. 4). In S46B, ECU 500 determines whether or not it has received the charging/discharging instruction (S41A) from server 20. When ECU 50 has received the charging/discharging instruction (remote instruction) from server 20 (YES in S46B), in S47B, ECU 500 carries out charging/discharging control of battery 100 in accordance with the charging/discharging instruction. When the subject vehicle receives the charging/discharging instruction from server 20, it performs charging/discharging (external charging or external power feed) of battery 100 in accordance with the charging/discharging instruction. When the charging/discharging instruction (remote instruction) has not been received (NO in S46B), on the other hand, the process proceeds to S48 with S47B being skipped.

Server 20 may perform process flow F4A only for each EM participating vehicle in the vehicle group. Server 20 may request each EM participating vehicle to perform energy management (EM) and only the EM participating vehicle that has received the request in the vehicle group may perform process flow F4B.

In the embodiment and each modification, server 20 (management apparatus) obtains the charging plan or the discharging plan for power adjustment in power grid PG (external power supply). Power grid PG is not limited to a large scale power network constructed as an infrastructure, but may be a microgrid. Server 20 functions as an aggregator that manages vehicles in a group. The management apparatus, however, may manage only a single vehicle rather than the vehicle group. The management apparatus may be an energy management system (EMS) for a building such as a factory EMS (FEMS) or a home EMS (HEMS). An example in which a function as the management apparatus is performed by the HEMS will be described below.

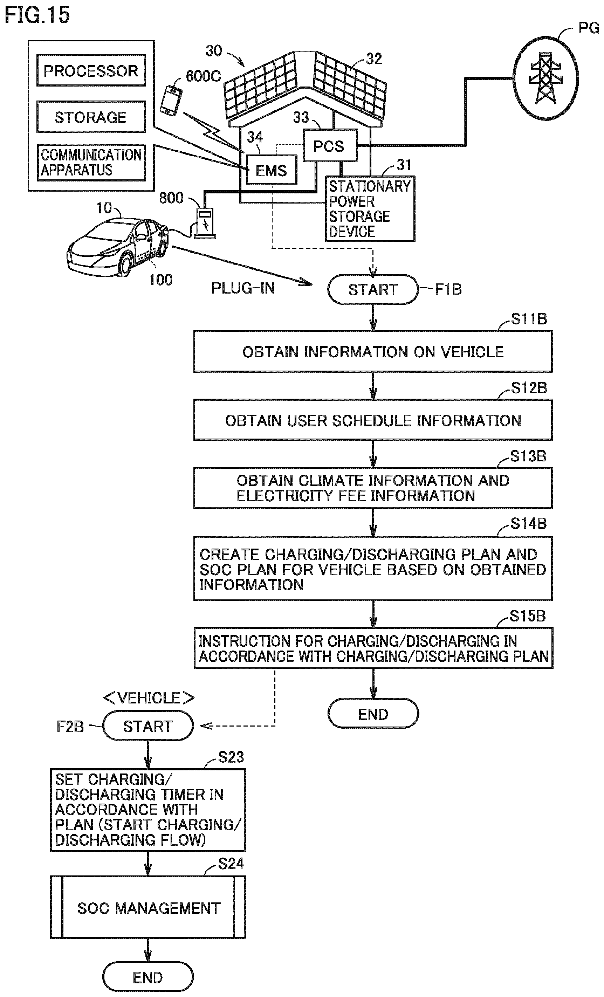

Fig. 15 is a diagram showing a process flow according to a sixth modification. Referring to Fig. 15, a building 30 includes a power storage device 31, a PV apparatus 32 (for example, a solar panel), a power conditioning system (PCS) 33, and an EMS 34. Building 30 is, for example, a house. Building 30 is connected to power grid PG. Electric power generated by PV apparatus 32 is inputted to power storage device 31 through PCS 33. Power storage device 31 is a stationary power storage device. Electric power in power storage device 31 is used in building 30 (for example, various devices connected to a panelboard), used for external charging of battery 100, or sold. Charging/discharging of power storage device 31 is controlled by PCS 33 and EMS 34. PCS 33 includes a switching apparatus that switches a power path and a power conversion circuit, and operates in accordance with an instruction from EMS 34. Vehicle 10 can supply electric power to building 30 through external power feed by battery 100. Vehicle 10 is electrically connected to building 30 (PCS 33), for example, through EVSE 800. Without being limited as such, vehicle 10 may electrically be connected to building 30 through a prescribed power cable (for example, a plug type power cable) without going through the EVSE.

EMS 34 is an EMS for building 30. EMS 34 includes a processor, a storage, and a communication apparatus. EMS 34 is configured to communicate with each of vehicle 10 and a mobile terminal 600C. Mobile terminal 600C is carried by a user of vehicle 10 and functions as a terminal of the user of vehicle 10.

EMS 34 manages energy in building 30 in cooperation with PCS 33. EMS 34 manages balance in power trade. Specifically, use of electric power supplied from power grid PG in building 30 incurs an electricity fee (payment incurred by electric power purchase) determined by an amount of use and a unit price for electric power purchase. In contrast, supply of electric power from building 30 to power grid PG produces an incentive (profit from electric power sales) determined by an amount of supply and a unit price for electric power sales. The unit price for electric power purchase and the unit price for electric power sales change from hour to hour. EMS 34 records balance in power trade by calculating each of payment incurred by electric power purchase and profit from electric power sales in succession.

EMS 34 starts a process flow F1B by being triggered by electrical connection of vehicle 10 to building 30. In S11B, EMS 34 obtains information on vehicle 10 (vehicle information). The vehicle information includes the power storage information that indicates the current measurement value of the SOC (amount of power storage) of battery 100, a travel plan set in the navigation system, and the specification information. The specification information of vehicle 10 may be registered in advance in EMS 34 (storage). In following S12B, EMS 34 obtains user schedule information that indicates a schedule of the user from mobile terminal 600C. The user schedule information is information inputted by the user to mobile terminal 600C.

The user schedule information includes, for example, a user plan that indicates scheduled departure time and the target SOC value and a scheduled time frame of stay. The scheduled time frame of stay represents a time frame for which the user is scheduled to stay in building 30. In following S13B, EMS 34 obtains climate information and electricity fee information from an external server (for example, a computer on the cloud). The electricity fee information indicates the unit price for electric power purchase and the unit price for electric power sales. The climate information indicates, for example, weather, an air temperature, and intensity of solar radiation.

In following S14B, EMS 34 creates the charging/discharging plan (the charging plan or the discharging plan) for vehicle 10 and the SOC plan (power storage plan) based on information obtained in S11B to S13B. EMS 34 sets the current time or time after lapse of a prescribed time period since the current time, as the plan start time of the charging/discharging plan. EMS 34 sets the scheduled departure time indicated in the user plan or time a prescribed time period before the scheduled departure time, as the plan end time of the charging/discharging plan. EMS 34 uses the vehicle information and the user schedule information to know a state of vehicle 10 and to predict a movement schedule of vehicle 10 and a power demand schedule in each of vehicle 10 and building 30. EMS 34 predicts an amount of electric power generated by PV apparatus 32 based on the climate information. EMS 34 then creates the charging/discharging plan such that necessary electric power is secured at necessary time in each of vehicle 10 and building 30 and balance in power trade turns positive (or a deficit is less). EMS 34 creates the SOC plan (power storage plan) for battery 100 with respect to the plan period of the charging/discharging plan with the method in conformity with S32 in Fig. 3. For example, EMS 34 sets the SOC measurement value (for example, the amount of power storage at the time of electrical connection of vehicle 10 to building 30) indicated in the power storage information obtained in S11B as the plan start SOC, and sets the target SOC value indicated in the user plan as the plan end SOC.

In following S15B, EMS 34 instructs vehicle 10 to perform charging/discharging of battery 100 in accordance with the charging/discharging plan by transmitting the charging/discharging plan to vehicle 10. When vehicle 10 receives the charging/discharging plan, it starts a process flow F2B. Process flow F2B is the same as process flow F2 except for removal of S21 and S22 (Fig. 3). In S23, vehicle 10 sets the charging/discharging plan (charging/discharging schedule) in ECU 500, and thereafter starts process flow F4 shown in Fig. 4. External charging or external power feed of battery 100 in accordance with the charging/discharging plan is thus performed. In S24, ECU 500 performs process flow F5 shown in Fig. 5. EMS 34, on the other hand, performs process flow F6 shown in Fig. 5. Great deviation of the amount of power storage in battery 100 from the plan is thus suppressed.

Building 30 may be independent (off-grid) of the power grid. In off-grid building 30, EMS 34 may create the charging/discharging plan for vehicle 10

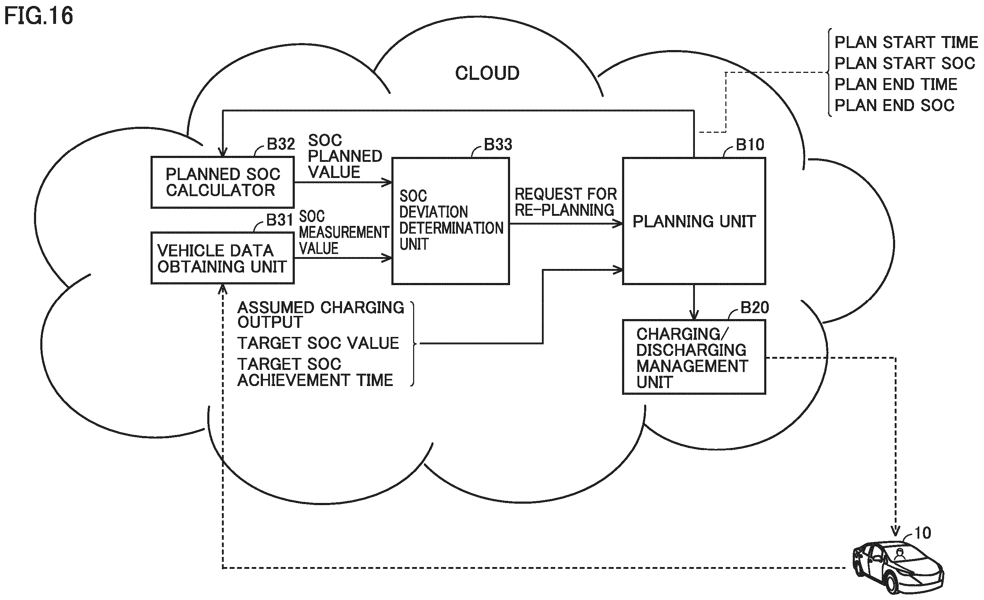

Server 20 shown in Fig. 1 is an on-premise server. The management apparatus, however, may be at least one computer on the cloud. For example, the function of server 20 may be implemented on the cloud. Fig. 16 is a diagram showing a configuration of a management apparatus according to a seventh modification. For example, a planning unit B10, a charging/discharging management unit B20, a vehicle data obtaining unit B31, a planned SOC calculator B32, and an SOC deviation determination unit B33 shown in Fig. 16 may be embodied by cloud computing. Planning unit B10 creates the charging/discharging plan and the SOC plan (see S31 and S32 in Fig. 3). Planning unit B10 creates the SOC plan from assumed charging output, for example, based on the charging/discharging plan and the target SOC value and target SOC achievement time indicated, for example, in the user plan. Planning unit B10 modifies the charging/discharging plan in accordance with a request from SOC deviation determination unit B33 (see S63 in Fig. 5). Charging/discharging management unit B20 instructs vehicle 10 to perform charging or discharging of the power storage device in accordance with the created charging/discharging plan (see S33 in Fig. 3). Vehicle data obtaining unit B31 communicates with vehicle 10 to obtain the power storage information (SOC measurement value) from vehicle 10. Planned SOC calculator B32 calculates the SOC planned value corresponding to time of measurement of the SOC measurement value (see S61 in Fig. 5). SOC deviation determination unit B33 determines whether or not the degree of deviation between the SOC measurement value received from vehicle data obtaining unit B31 and the SOC planned value received from planned SOC calculator B32 is within a prescribed allowable range (see S62 in Fig. 5). When SOC deviation determination unit B33 determines that the degree of deviation has exceeded the allowable range, it requests planning unit B10 to modify (re-plan) the charging/discharging plan (see S63 in Fig. 5).

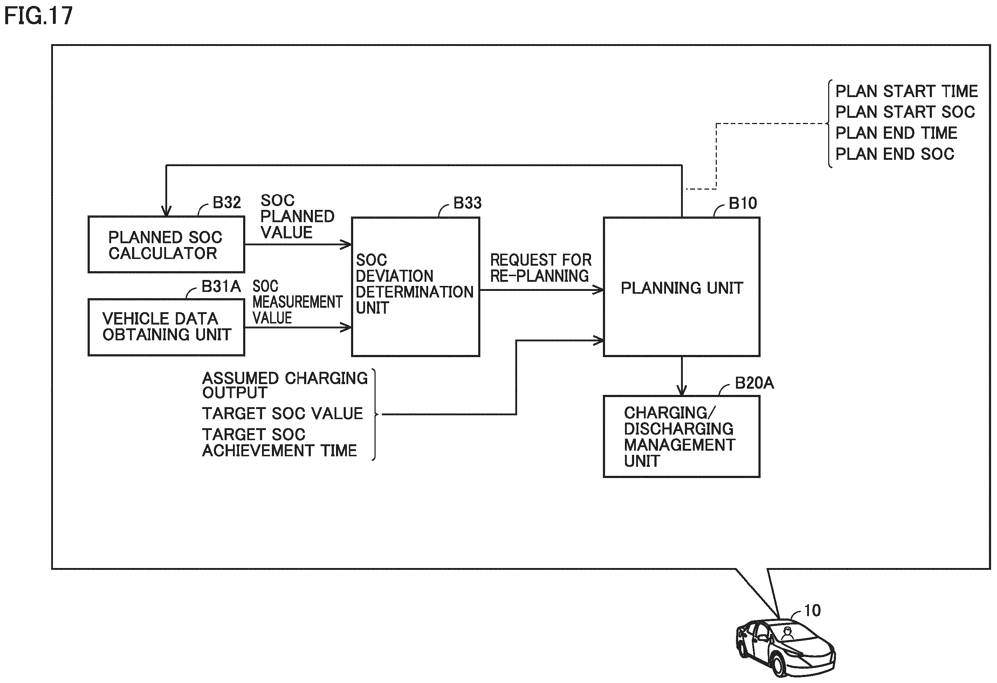

The function of server 20 may be implemented in the vehicle. For example, the controller of the vehicle may function as the management apparatus. Fig. 17 is a diagram showing a configuration of a management apparatus according to an eighth modification. Referring to Fig. 17 together with Fig. 2, in the eighth modification, planning unit B10, a charging/discharging management unit B20A, a vehicle data obtaining unit B31A, planned SOC calculator B32, and SOC deviation determination unit B33 are implemented in the controller (for example, ECU 500) of vehicle 10. Charging/discharging management unit B20A programs timer charging or timer discharging of battery 100 in accordance with the charging/discharging plan created by planning unit B10 (see S23 in Fig. 3). Charging or discharging of battery 100 in accordance with the charging/discharging plan is thus performed. Vehicle data obtaining unit B31A obtains the power storage information (SOC measurement value) from BMS 110. Each of other components is the same as in the seventh modification shown in Fig. 16.

The configuration of the vehicle is not limited to the configuration shown in Fig. 2. In the embodiment, vehicle 10 includes PV apparatus 410 and power conversion circuit 420 as a variable renewable energy source (a power supply that varies in output of generated power depending on a climate condition). It is not essential, however, that the vehicle is provided with such a power supply (power generator), and PV apparatus 410 and power conversion circuit 420 do not have to be provided. The vehicle may be configured to be capable of wireless charging. The vehicle that performs wireless charging may be regarded as being in a state comparable to the "grid connected state" described previously when alignment between a power transmission portion (for example, a power transmission coil) on a side of the power feed facility and a power reception portion (for example, a power reception coil) on a side of the vehicle is completed. Of external charging and external power feed, the vehicle may be configured to be capable only of external charging. The management apparatus may constantly obtain the charging plan as the individual vehicle plan.

The vehicle is not limited to a passenger car, and a bus, a truck, or a work vehicle (a tractor, a forklift, or the like) may be applicable. The vehicle may be configured to travel by autonomous drive or remote drive, without human intervention. The vehicle may be an automated guided vehicle (AGV).

Though an embodiment of the present disclosure has been described, it should be understood that the embodiment disclosed herein is illustrative and non-restrictive in every respect. The scope of the present disclosure is defined by the terms of the claims and is intended to include any modifications within the scope and meaning equivalent to the terms of the claims.

## Claims

1. A management system comprising:
a management apparatus (20, 34) that manages a power storage device (100) mounted on a vehicle (10), wherein
the management apparatus (20, 34) is configured to instruct the vehicle (10) to charge the power storage device (100) in accordance with a charging plan that indicates a charging schedule in a plan period,
the management apparatus (20, 34) is configured to obtain a power storage plan for the power storage device (100) with respect to the plan period,
the power storage plan includes at least one piece of plan data that indicates combination of time within the plan period and a planned value of an amount of power storage in the power storage device (100) at that time, and
the management apparatus (20, 34) is configured to modify the charging plan in response to determination that the amount of power storage in the power storage device (100) deviates from the power storage plan beyond an allowable range.

2. The management system according to claim 1, wherein
the at least one piece of plan data included in the power storage plan includes
first plan data that indicates combination of start time of the plan period and the planned value of the amount of power storage in the power storage device (100) at that start time, and
second plan data that indicates combination of end time of the plan period and the planned value of the amount of power storage in the power storage device (100) at that end time.

3. The management system according to claim 2, wherein
the at least one piece of plan data included in the power storage plan further includes third plan data at time after the start time of the plan period and before the end time of the plan period, and
the management apparatus (20, 34) is configured to obtain the third plan data based on at least one of the first plan data and the second plan data.

4. The management system according to claim 1, wherein
the vehicle (10) is configured to perform, in response to the vehicle receiving a discharging request directed to the power storage device (100) within the plan period, discharging of the power storage device (100) in accordance with the discharging request while the vehicle performs charging of the power storage device (100) in accordance with the charging plan, and
the discharging request includes at least one of a discharging request from a user and a discharging request under predetermined vehicle control.

5. The management system according to claim 1, wherein
the management apparatus (20, 34) is configured to determine the allowable range based on a maximum amount of electric power chargeable to the power storage device (100) by the vehicle (10) per unit period and a maximum amount of electric power dischargeable from the power storage device (100) by the vehicle (10) per unit period.

6. The management system according to claim 1, wherein
the management apparatus (20, 34) is configured to
obtain a measurement value of the amount of power storage in the power storage device (100) in response to the vehicle (10) being connected to an external power feed facility (800), and
obtain the charging plan and the power storage plan for the power storage device (100) by using the obtained measurement value of the amount of power storage.

7. The management system according to claim 1, wherein
the vehicle (10) further includes a controller (500),
the vehicle (10) is configured to set in the controller (500), the charging schedule shown in the charging plan in response to the vehicle being instructed by the management apparatus (20, 34) to charge the power storage device (100) in accordance with the charging plan, and
the controller (500) is configured to carry out charging control for the power storage device (100) in accordance with the set charging schedule.

8. The management system according to claim 1, wherein
the vehicle (10) is configured to transmit to the management apparatus (20, 34), power storage information that indicates a measurement value of the amount of power storage in the power storage device (100) in response to a prescribed condition being satisfied, and
the management apparatus (20, 34) is configured to
determine whether the amount of power storage in the power storage device deviates from the power storage plan beyond the allowable range in response to the management apparatus receiving the power storage information from the vehicle (10), and
modify the charging plan based on the power storage information and the power storage plan in response to determination that the amount of power storage in the power storage device (100) deviates from the power storage plan beyond the allowable range.

9. The management system according to claim 8, wherein
when the vehicle (10) performs charging of the power storage device (100) before the plan period, the prescribed condition is satisfied at time of end of charging of the power storage device (100), and
the management apparatus (20, 34) is configured to
determine whether a degree of deviation between the measurement value of the amount of power storage at the time of end of charging of the power storage device (100) and the planned value of the amount of power storage at the start time of the plan period exceeds the allowable range based on the power storage information and the power storage plan in response to the management apparatus receiving the power storage information from the vehicle (10), and
modify the charging plan based on the power storage information and the power storage plan in response to determination that the degree of deviation exceeds the allowable range.

10. The management system according to claim 8, wherein
the prescribed condition is satisfied when charging of the power storage device (100) stops within the plan period, and
the management apparatus (20, 34) is configured to
determine whether a degree of deviation between the measurement value of the amount of power storage at current time and the planned value of the amount of power storage exceeds the allowable range based on the power storage information and the power storage plan in response to the management apparatus receiving the power storage information from the vehicle (10), and
modify the charging plan based on the power storage information and the power storage plan in response to determination that the degree of deviation exceeds the allowable range.

11. The management system according to claim 1, wherein
the management apparatus (20, 34) is configured to
obtain a measurement value of the amount of power storage in the power storage device (100) at timing a prescribed time period before the end time of the charging plan, and
extend the plan period of the charging plan in response to determination that the obtained measurement value deviates from the power storage plan beyond the allowable range.

12. The management system according to claim 1, wherein
the management apparatus (20, 34) is configured to instruct the vehicle (10) to discharge the power storage device (100) in accordance with a discharging plan that indicates a discharging schedule in the plan period, and
the management apparatus (20, 34) is configured to
obtain the power storage plan for the power storage device (100) with respect to the plan period of the discharging plan, and
modify the discharging plan in response to determination that the amount of power storage in the power storage device (100) deviates from the obtained power storage plan beyond an allowable range.

13. The management system according to any one of claims 1 to 12, wherein
the management apparatus is at least one computer (B10, B20, B31 to B33) on a cloud.

14. A vehicle (10) comprising:
a power storage device (100); and
a management apparatus (500) that manages the power storage device (100), wherein
the management apparatus (500) is configured to perform charging of the power storage device (100) in accordance with a charging plan that indicates a charging schedule in a plan period,
the management apparatus (500) is configured to obtain a power storage plan for the power storage device (100) with respect to the plan period,
the power storage plan includes at least one piece of plan data that indicates combination of time within the plan period and a planned value of an amount of power storage in the power storage device (100) at that time, and
the management apparatus (500) is configured to modify the charging plan in response to determination that the amount of power storage in the power storage device (100) deviates from the power storage plan beyond an allowable range.

15. A method of managing a power storage device (100) mounted on a vehicle (10), the method comprising:
instructing the vehicle (10) to charge the power storage device (100) in accordance with a charging plan that indicates a charging schedule in a plan period;
obtaining a power storage plan for the power storage device (100) with respect to the plan period,
the power storage plan including at least one piece of plan data that indicates combination of time within the plan period and a planned value of an amount of power storage in the power storage device (100) at that time;
modifying the charging plan in response to determination that a measurement value of the amount of power storage in the power storage device (100) deviates from the power storage plan beyond an allowable range; and
instructing the vehicle (10) to charge the power storage device (100) in accordance with the modified charging plan.
